# EUROPEAN PATENT APPLICATION

(11) **EP 4 834 131 A1**
(43) Date of publication of application: **04.11.2026**
(21) Application number: 24913283.8
(22) Date of filing: 20.09.2024
(51) Int. Cl.: A24D 1/20, A24F 40/46, A24F 40/40, G02B 5/00, G02B 6/122

(54) **AEROSOL-GENERATING ARTICLE COMPRISING SURFACE PLASMON RESONANCE HEAT SOURCE AND AEROSOL-GENERATING SYSTEM COMPRISING SAME**

(30) Priority: 29.12.2023 KR 20230196359
(71) Applicant: KT&G Corporation, Daedeok-gu Daejeon 34337 (KR)
(72) Inventor: LEE, Wonkyeong, Guri-si Gyeonggi-do 11920 (KR); HAN, Dae Nam, Seoul 06331 (KR)
(74) Representative: Ter Meer und Partner mbB
(86) International application number: PCT/KR2024/014164
(87) International publication number: WO 2025/143442

(57) **Abstract**

This aerosol-generating article comprises a first segment, the first segment comprising a medium and a heat source generating heat via surface plasmon resonance, wherein the heat source may comprise a substrate and a plurality of metal particles disposed thereon.

## Description

### TECHNICAL FIELD

The disclosure relates generally to an aerosol generating article and an aerosol generating system, for example, to an aerosol generating article and an aerosol generating system, including a surface plasmon resonance (SPR) heat source.

### BACKGROUND ART

Techniques for introducing airflows into an aerosol generating article are being developed to provide atomization performance. For example, aerosol generating devices that generate an aerosol from an aerosol generating article in a non-burning manner are being developed. The above description is information the inventor(s) acquired during the course of conceiving the present disclosure, or already possessed at the time, and is not necessarily art publicly known before the present application was filed.

### DISCLOSURE OF THE INVENTION

### TECHNICAL GOALS

An aspect of the disclosure may provide an aerosol generating article in which an aerosol is generated with increased thermal efficiency. Another aspect of the disclosure may provide an aerosol generating system that generates an aerosol with increased thermal efficiency.

### TECHNICAL SOLUTIONS

An aerosol generating article includes a first segment, the first segment includes a medium, and a heat source configured to generate heat by surface plasmon resonance (SPR), and the heat source includes a substrate, and a plurality of metal particles disposed on the substrate.

The heat source may further include an absorbing layer disposed on the substrate and configured to absorb light penetrating through the substrate.

The heat source may further include a reflective layer disposed on the substrate and configured to reflect light toward the substrate.

The heat source may further include a heat transfer body configured to transfer heat to the medium.

The substrate may include a first end portion facing upstream of the first segment, a second end portion facing downstream of the first segment, and a side portion extending between the first end portion and the second end portion.

The first end portion may include an opening.

The second end portion may include a closed surface.

The first segment may include a plurality of heat sources distributed at arbitrary intervals across a width or a diameter of the first segment.

The aerosol generating article may further include a second segment connected to the first segment, and the second segment may include a filter.

The aerosol generating article may further include a third segment connected to the second segment, and the third segment may be configured to cool a generated aerosol.

The aerosol generating article may further include a fourth segment connected to the third segment, and the fourth segment may include an acetate tow.

The substrate may include an outer surface, and an inner surface opposite to the outer surface, and the inner surface may include a curved surface and define a cavity.

The substrate may include a first end portion facing upstream of the first segment, and a side portion extending toward downstream from the first end portion, and the substrate may have a domical solid disposed toward downstream from the side portion.

The substrate may include a first end portion facing upstream of the first segment, a second end portion facing downstream of the first segment, a side portion extending between the first end portion and the second end portion, and at least one extension extending from the second end portion or the side portion.

An aerosol generating system includes the aerosol generating article, and an aerosol generating device configured to generate an aerosol from the aerosol generating article, and the aerosol generating device includes a plurality of light sources.

### EFFECTS OF THE INVENTION

According to an embodiment, the thermal efficiency of the aerosol generating article may increase. According to an embodiment, the power required to heat the aerosol generating article may be reduced. The effects of the aerosol generating article and the aerosol generating system according to an embodiment are not limited to the above-mentioned effects, and other unmentioned effects may be clearly understood from the following description by one of ordinary skill in the art.

### BRIEF DESCRIPTION OF DRAWINGS

The foregoing and other aspects, features, and advantages of embodiments in the disclosure will become apparent from the following detailed description with reference to the accompanying drawings.
FIG. 1 is a block diagram of an aerosol generating device according to an embodiment of the present disclosure.
FIG. 2 is a diagram illustrating an aerosol generating device according to an embodiment of the present disclosure.
FIG. 3 is a diagram illustrating an aerosol generating device according to another embodiment of the present disclosure.
FIG. 4 is a diagram illustrating an aerosol generating device according to another embodiment of the present disclosure.
FIG. 5 is a front perspective view of an aerosol generating device according to embodiments of the present disclosure.
FIG. 6 is an exploded cross-sectional view of an upper case and a body of an aerosol generating device according to an embodiment of the present disclosure.
FIG. 7 is an assembled cross-sectional view of an upper case and a body of an aerosol generating device according to an embodiment of the present disclosure.
FIG. 8 is an exploded cross-sectional view of an upper case and a body of an aerosol generating device according to another embodiment of the present disclosure.
FIG. 9 is an assembled cross-sectional view of an upper case and a body of an aerosol generating device according to another embodiment of the present disclosure.
FIG. 10 is an exploded cross-sectional view of an upper case, a body, and a heater holder of an aerosol generating device according to another embodiment of the present disclosure.
FIG. 11 is an assembled cross-sectional view of an upper case, a body, and a heater holder of an aerosol generating device according to another embodiment of the present disclosure.
FIG. 12 is a cross-sectional view of a heater holder of an aerosol generating device according to another embodiment of the present disclosure.
FIG. 13 is an exploded perspective view of an upper case, a body, and a heater holder of an aerosol generating device according to another embodiment of the present disclosure.
FIG. 14 is an assembled cross-sectional view of an upper case, a body, and a heater holder of an aerosol generating device according to another embodiment of the present disclosure.
FIG. 15 is a perspective view of an aerosol generating article according to an embodiment.
FIG. 16 is a diagram illustrating a cross-section of an aerosol generating article according to an embodiment.
FIG. 17 is a diagram illustrating a cross-section of a portion of an aerosol generating article according to an embodiment.
FIG. 18 is a diagram illustrating a cross-section of a portion of a heat source according to an embodiment.
FIG. 19 is a diagram illustrating a cross-section of a portion of a heat source according to an embodiment.
FIG. 20 is a diagram illustrating a cross-section of a portion of an aerosol generating article according to an embodiment.
FIG. 21 is a diagram illustrating a cross-section of a portion of an aerosol generating article according to an embodiment.
FIG. 22 is a diagram illustrating a cross-section of a portion of an aerosol generating article according to an embodiment.
FIG. 23 is a diagram illustrating an aerosol generating system according to an embodiment.
FIG. 24 is a diagram illustrating an aerosol generating system according to an embodiment.

### BEST MODE FOR CARRYING OUT THE INVENTION

Description will now be given in detail according to embodiments set forth herein with reference to the accompanying drawings. The same or equivalent components may be denoted by the same reference numerals, and description thereof will not be repeated.

Suffixes such as "module" and "unit" used for components in the following description are assigned or interchangeably used to facilitate description of the specification and do not have any special meanings or functions.

Further, in the description of embodiments set forth herein, a detailed description of well-known related arts will be omitted when it is deemed that such description will cause ambiguous interpretation of the embodiments. Further, the accompanying drawings are merely intended for easier understanding of the embodiments set forth herein, and the technical idea of the present disclosure is not limited thereto, and the embodiments should be understood to include all changes, equivalents, and replacements within the idea and the technical scope of the disclosure.

Although terms of "first" or "second" are used to explain various components, the components are not limited to the terms. These terms are used only to distinguish one component from another component.

It should be noted that if it is described that one component is "connected", "coupled", or "joined" to another component, a third component may be "connected", "coupled", and "joined" between the first and second components, although the first component may be directly connected, coupled, or joined to the second component. On the contrary, it should be noted that if it is described that one component is "directly connected," "directly coupled," or "directly joined" to another component, a third component may be absent.

The singular forms "a", "an", and "the" include the plural forms as well, unless the context clearly indicates otherwise.

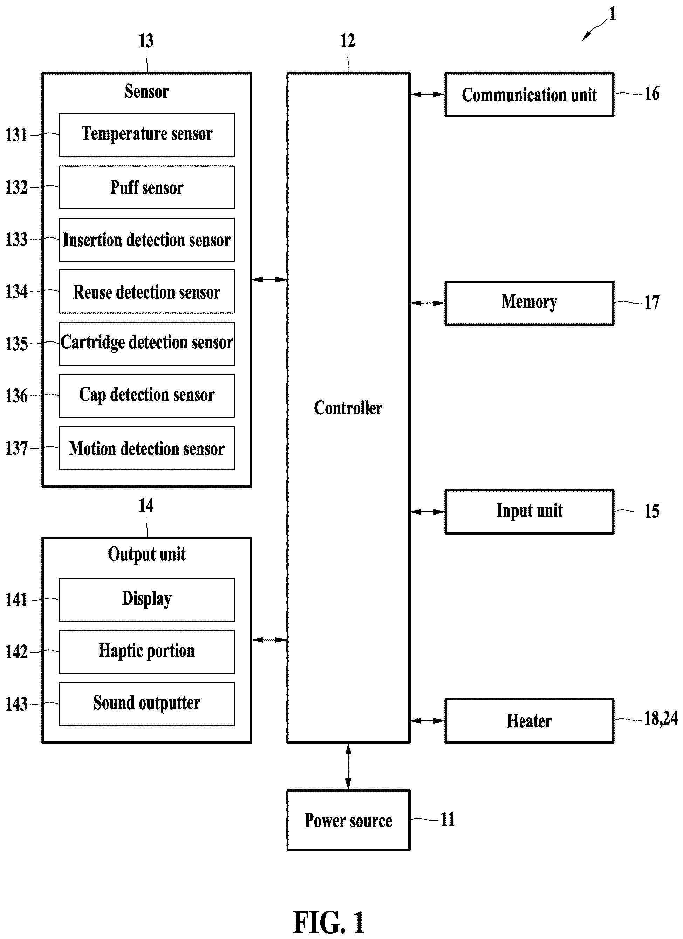

FIG. 1 is a block diagram of an aerosol generating device 1 according to an embodiment of the present disclosure.

The aerosol generating device 1 may include a power source 11, a controller 12, a sensor 13, an output unit 14, an input unit 15, a communication unit 16, a memory 17, and at least one heater 18, 24. However, an internal structure of the aerosol generating device 1 is not limited to what is shown in FIG. 1. It is to be understood by one of ordinary skill in the art to which the disclosure pertains that some of the components shown in FIG. 1 may be omitted or new components may be added according to the design of the aerosol generating device 1.

The sensor 13 may sense a state of the aerosol generating device 1 or a state of an environment around the aerosol generating device 1 and transmit sensed information to the controller 12. Based on the sensed information, the controller 12 may control the aerosol generating device 1 to control operations of the cartridge heater 24 and/or the heater 18, restrict smoking, determine whether a stick S and/or a cartridge 19 is inserted, display a notification, and perform other functions.

The sensor 13 may include at least one of a temperature sensor 131, a puff sensor 132, an insertion detection sensor 133, a reuse detection sensor 134, a cartridge detection sensor 135, a cap detection sensor 136, and a motion detection sensor 137.

The temperature sensor 131 may sense a temperature at which the cartridge heater 24 and/or the heater 18 is heated. The aerosol generating device 1 may include a separate temperature sensor to sense the temperature of the cartridge heater 24 and/or the heater 18, or the cartridge heater 24 and/or the heater 18 itself may serve as a temperature sensor.

The temperature sensor 131 may output a signal corresponding to the temperature of the cartridge heater 24 and/or the heater 18. For example, the temperature sensor 131 may include a resistive element whose resistance value changes in response to a change in the temperature of the cartridge heater 24 and/or the heater 18. The temperature sensor 131 may be implemented by a thermistor, which is an element that uses the property that the resistance changes depending on the temperature. At this time, the temperature sensor 131 may output a signal corresponding to the resistance value of the resistive element as the signal corresponding to the temperature of the cartridge heater 24 and/or the heater 18. For example, the temperature sensor 131 may be configured as a sensor for detecting the resistance value of the cartridge heater 24 and/or the heater 18. At this time, the temperature sensor 131 may output a signal corresponding to the resistance value of the cartridge heater 24 and/or the heater 18 as the signal corresponding to the temperature of the cartridge heater 24 and/or the heater 18.

The temperature sensor 131 may be arranged around the power source 11 to monitor the temperature of the power source 11. The temperature sensor 131 may be disposed adjacent to the power source 11. For example, the temperature sensor 131 may be attached to one surface of a battery, which is the power source 11. For example, the temperature sensor 131 may be mounted on one surface of a printed circuit board (PCB).

The temperature sensor 131 may be disposed inside the body 10 to sense the internal temperature of the body 10.

The puff sensor 132 may sense a puff from a user based on various physical changes in an airflow path. The puff sensor 132 may output a signal corresponding to the puff. For example, the puff sensor 132 may be a pressure sensor. The puff sensor 132 may output a signal corresponding to the internal pressure of the aerosol generating device 1. Here, the internal pressure of the aerosol generating device 1 may correspond to the pressure in an airflow path through which a gas flows. The puff sensor 132 may be disposed corresponding to the airflow path through which a gas flows in the aerosol generating device 1.

The insertion detection sensor 133 may sense the insertion and/or removal of the stick S. The insertion detection sensor 133 may sense a signal change according to the insertion and/or removal of the stick S. The insertion detection sensor 133 may be installed in the vicinity of an insertion space. The insertion detection sensor 133 may sense the insertion and/or removal of the stick S according to a change in the permittivity inside the insertion space. For example, the insertion detection sensor 133 may be an inductive sensor and/or a capacitance sensor.

The inductive sensor may include at least one coil. The coil of the inductive sensor may be disposed adjacent to the insertion space. For example, if the magnetic field changes around the coil through which an electric current flows, the properties of the current flowing through the coil may change according to Faraday's law of electromagnetic induction. Here, the properties of the current flowing through the coil may include the frequency of alternating current, the current value, the voltage value, the inductance value, the impedance value, and the like.

The inductive sensor may output a signal corresponding to the properties of the current flowing through the coil. For example, the inductive sensor may output a signal corresponding to the inductance value of the coil.

The capacitance sensor may include a conductor. The conductor of the capacitance sensor may be disposed adjacent to the insertion space. The capacitance sensor may output a signal corresponding to the electromagnetic properties of the surroundings, for example, the capacitance around the conductor. For example, when the stick S including a metal wrapper is inserted into the insertion space, the electromagnetic properties around the conductor may change due to the wrapper of the stick S.

The reuse detection sensor 134 may sense whether the stick S is reused. The reuse detection sensor 134 may be a color sensor. The color sensor may sense the color of the stick. The color sensor may sense the color of a portion of the wrapper that wraps around the outside of the stick S. The color sensor may detect a value of the optical properties corresponding to the color of an object based on light reflected from the object. For example, the optical properties may be the wavelength of light. The color sensor may be implemented as a single component in conjunction with a proximity sensor, or may be implemented as a separate component different from the proximity sensor.

At least a portion of the wrapper of the stick S may change in color due to an aerosol. The reuse detection sensor 134 may be disposed at a position corresponding to the position at which at least a portion of the wrapper that changes in color due to an aerosol is disposed when the stick S is inserted into the insertion space. For example, before the stick S is used by the user, the color of at least a portion of the wrapper may be a first color. At this time, as at least a portion of the wrapper is wet by the aerosol while the aerosol generated by the aerosol generating device 1 passes through the stick S, the color of the at least a portion of the wrapper may change to a second color. Meanwhile, the color of the at least a portion of the wrapper may be maintained as the second color after changing from the first color to the second color.

The cartridge detection sensor 135 may sense the mounting and/or removal of the cartridge 19. The cartridge detection sensor 135 may be implemented by an inductance-based sensor, a capacitive sensor, a resistance sensor, or a Hall sensor (e.g., Hall IC) using the Hall effect.

The cap detection sensor 136 may sense the mounting and/or removal of a cap. When the cap is detached from the body 10, a portion of the cartridge 19 and the body 10 covered by the cap may be exposed to the outside. The cap detection sensor 136 may be implemented by a contact sensor, a Hall sensor (e.g., Hall IC), an optical sensor, or the like.

The motion detection sensor 137 may sense a motion of the aerosol generating device 1. The motion detection sensor 137 may be implemented by at least one of an acceleration sensor and a gyro sensor.

In addition to the sensors 131 to 137 described above, the sensor 13 may further include at least one of a humidity sensor, a barometric pressure sensor, a magnetic sensor, a position sensor (e.g., global positioning system (GPS)), and a proximity sensor. A function of each of the sensors may be intuitively inferable from its name by one of ordinary skill in the art, and thus, a more detailed description thereof will be omitted here.

The output unit 14 may output information about the state of the aerosol generating device 1 and provide the information to the user. The output unit 14 may include at least one of a display 141, a haptic portion 142, or a sound outputter 143, but is not limited thereto. When the display 141 and a touchpad are provided in a layered structure to form a touchscreen, the display 141 may be used as an input device in addition to an output device.

The display 141 may visually provide information about the aerosol generating device 1 to the user. The information about the aerosol generating device 1 may include, for example, a charging/discharging state of the power source 11 of the aerosol generating device 1, a preheating state of the heater 18, an insertion/removal state of the stick S and/or the cartridge 19, a mounting/removal state of the cap, or a limited usage state (e.g., an abnormal article detected) of the aerosol generating device 1, or the like, and the display 141 may externally output the information. For example, the display 141 may be in a form of a light-emitting diode (LED) device. The display 141 may be, for example, a liquid-crystal display panel (LCD), an organic light-emitting display panel (OLED), or the like.

The haptic portion 142 may provide the information about the aerosol generating device 1 to the user in a haptic way by converting an electrical signal into a mechanical stimulus or an electrical stimulus. For example, the haptic portion 142 may generate vibrations corresponding to the completion of initial preheating when initial power is supplied to the cartridge heater 24 and/or the heater 18 for a set time. The haptic portion 142 may include, for example, a vibration motor, a piezoelectric element, or an electrical stimulation device.

The sound outputter 143 may provide the information about the aerosol generating device 1 to the user in an auditory way. For example, the sound outputter 143 may convert an electrical signal into a sound signal and externally output the sound signal.

The power source 11 may supply power to be used to operate the aerosol generating device 1. The power source 11 may supply power to heat the cartridge heater 24 and/or the heater 18. In addition, the power source 11 may supply power required for operations of the other components (e.g., the sensor 13, the output unit 14, the input unit 15, the communication unit 16, and the memory 17) included in the aerosol generating device 1. The power source 11 may be a rechargeable battery or a disposable battery. The power source 11 may be, for example, a lithium polymer (LiPoly) battery but is not limited thereto.

Although not shown in FIG. 1, the aerosol generating device 1 may further include a power protection circuit. The power protection circuit may be electrically connected to the power source 11 and may include a switching element.

The power protection circuit may cut off an electrical circuit for the power source 11 under a predetermined condition. For example, the power protection circuit may cut off the electrical circuit for the power source 11 when the voltage level of the power source 11 is greater than or equal to a first voltage corresponding to overcharging. For example, the power protection circuit may cut off the electrical circuit for the power source 11 when the voltage level of the power source 11 is less than a second voltage corresponding to overdischarging.

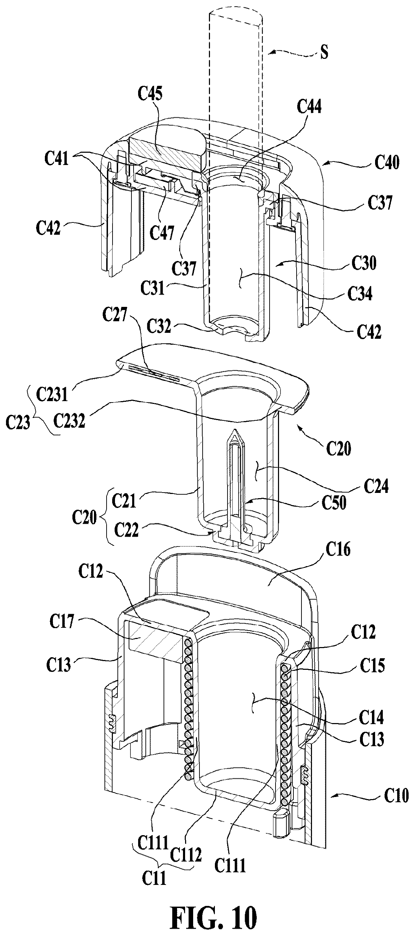

The heater 18 may receive power from the power source 11 to heat a medium or an aerosol generating material in the stick S. Although not shown in FIG. 10, the aerosol generating device 1 may further include a power conversion circuit (e.g., a direct current (DC)-to-DC (DC/DC) converter) that converts power of the power source 11 and supplies the power to the cartridge heater 24 and/or the heater 18. In addition, when the aerosol generating device 1 generates an aerosol in an induction heating manner, the aerosol generating device 1 may further include a DC-to-alternating current (AC) (DC/AC) converter that converts DC power of the power source 11 into AC power.

The controller 12, the sensor 13, the output unit 14, the input unit 15, the communication unit 16, and the memory 17 may receive power from the power source 11 to perform functions. Although not shown in FIG. 1, a power conversion circuit, for example, a low dropout (LDO) circuit or a voltage regulator circuit, which converts power of the power source 11 and supplies the power to respective components, may further be included. In addition, although not shown in FIG. 10, a noise filter may be provided between the power source 11 and the heater 18. The noise filter may be a low-pass filter. The low-pass filter may include at least one inductor and at least one capacitor. The cutoff frequency of the low-pass filter may correspond to the frequency of a high-frequency switching current applied from the power source 11 to the heater 18. The low-pass filter may prevent the application of a high-frequency noise component to the sensor 13, such as the insertion detection sensor 133.

In an embodiment, the cartridge heater 24 and/or the heater 18 may be formed of a predetermined electrically resistive material that is suitable. The electrically resistive material may be a metal or a metal alloy including, for example, titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 18 may be implemented as a metal heating wire, a metal heating plate on which an electrically conductive track is arranged, a ceramic heating element, or the like, but is not limited thereto.

In another embodiment, the heater 18 may be an induction heater. For example, the heater 18 may include a susceptor that heats the aerosol generating material by generating heat through a magnetic field applied by a coil.

The input unit 15 may receive information input from the user or may output information to the user. For example, the input unit 15 may be a touch panel. The touch panel may include at least one touch sensor for sensing a touch. For example, the touch sensor may include a capacitive touch sensor, a resistive touch sensor, a surface acoustic wave touch sensor, an infrared touch sensor, and the like, but is not limited thereto.

The display 141 and the touch panel may be implemented as a single panel. For example, the touch panel may be inserted into the display 141 (e.g., an on-cell type or in-cell type). For example, the touch panel may be added onto the display panel 141 (e.g., an add-on type).

Meanwhile, the input unit 15 may include a button, a keypad, a dome switch, a jog wheel, a jog switch, and the like, but is not limited thereto.

The memory 17, which is hardware for storing various pieces of data processed in the aerosol generating device 1, may store data processed by the controller 12 and data to be processed by the controller 12. The memory 17 may include at least one type of storage medium of flash memory-type memory, hard disk-type memory, multimedia card micro-type memory, card-type memory (e.g., secure digital (SD) or extreme digital (XD) memory), random access memory (RAM), static RAM (SRAM), read-only memory (ROM), electrically erasable programmable ROM (EEPROM), programmable ROM (PROM), magnetic memory, a magnetic disk, or an optical disk. The memory 17 may store an operating time of the aerosol generating device 1, a maximum number of puffs, a current number of puffs, at least one temperature profile, data associated with a smoking pattern of the user, or the like.

The communication unit 16 may include at least one component for communicating with another electronic device. For example, the communication unit 16 may include at least one of a short-range wireless communication unit and a wireless communication unit.

The short-range wireless communication unit may include a Bluetooth communication unit, a Bluetooth low energy (BLE) communication unit, a near-field communication unit, a WLAN (Wi-Fi) communication unit, a ZigBee communication unit, an infrared data association (IrDA) communication unit, a Wi-Fi direct (WFD) communication unit, an ultra-wideband (UWB) communication unit, and an Ant+ communication unit, but is not limited thereto.

The wireless communication unit may include, for example, a cellular network communication unit, an Internet communication unit, a computer network (e.g., a LAN or a wide-area network (WAN)) communication unit, and the like but is not limited thereto.

Although not shown in FIG. 1, the aerosol generating device 1 may further include a connection interface such as a universal serial bus (USB) interface and may be connected to another external device through the connection interface such as a USB interface to transmit and receive information or to charge the power source 11.

The controller 12 may control the overall operation of the aerosol generating device 1. In an embodiment, the controller 12 may include at least one processor. The processor may be implemented as an array of a plurality of logic gates, or may be implemented as a combination of a general-purpose microprocessor and a memory in which a program executable by the microprocessor is stored. In addition, it is to be understood by one of ordinary skill in the art to which the disclosure pertains that it may be implemented in other types of hardware.

The controller 12 may control the temperature of the heater 18 by controlling the supply of power from the power source 11 to the heater 18. The controller 12 may control the temperature of the cartridge heater 24 and/or the heater 18 based on the temperature of the cartridge heater 24 and/or the heater 18 sensed by the temperature sensor 131. The controller 12 may adjust the power supplied to the cartridge heater 24 and/or the heater 18 based on the temperature of the cartridge heater 24 and/or the heater 18. For example, the controller 12 may determine a target temperature for the cartridge heater 24 and/or the heater 18 based on a temperature profile stored in the memory 17.

The aerosol generating device 1 may include a power supply circuit (not shown) electrically connected to the power source 11 between the power source 11 and the cartridge heater 24 and/or the heater 18. The power supply circuit may be electrically connected to the cartridge heater 24, the heater 18, or the induction coil 181. The power supply circuit may contain at least one switching element. The switching element may be implemented by a bipolar junction transistor (BJT), a field effective transistor (FET), or the like. The controller 12 may control the power supply circuit.

The controller 12 may control the power supply by controlling the switching of the switching element of the power supply circuit. The power supply circuit may be an inverter for converting DC power output from the power source 11 into AC power. For example, the inverter may be configured as a half-bridge circuit or a full-bridge circuit including a plurality of switching elements.

The controller 12 may turn on the switching element to supply power from the power source 11 to the cartridge heater 24 and/or the heater 18. The controller 12 may turn off the switching element to cut off the supply of power to the cartridge heater 24 and/or the heater 18. The controller 12 may adjust the current supplied from the power source 11 by adjusting the frequency and/or duty ratio of the current pulse input to the switching element.

The controller 12 may control the voltage output from the power source 11 by controlling the switching of the switching element of the power supply circuit. A power conversion circuit may convert the voltage output from the power source 11. For example, the power conversion circuit may include a buck-converter for decreasing the voltage output from the power source 11. For example, the power conversion circuit may be implemented through a buck-boost converter, a Zener diode, or the like.

The controller 12 may adjust the level of voltage output from the power conversion circuit by controlling an ON/OFF operation of the switching element included in the power conversion circuit. During the ON state of the switching element, the level of voltage output from the power conversion circuit may correspond to the level of voltage output from the power source 11. The duty ratio for the ON/OFF operation of the switching element may correspond to the ratio of the voltage output from the power conversion circuit to the voltage output from the power source 11. As the duty ratio for the ON/OFF operation of the switching element decreases, the level of voltage output from the power conversion circuit may decrease. The heater 18 may be heated based on the voltage output from the power conversion circuit.

The controller 12 may control to supply power to the heater 18 using at least one of a pulse width modulation (PWM) scheme and a proportional-integral-differential (PID) scheme.

For example, the controller 12 may control to supply a current pulse with a predetermined frequency and a duty ratio to the heater 18, using the PWM scheme. The controller 12 may control the power supplied to the heater 18 by adjusting the frequency and duty ratio of the current pulse.

For example, the controller 12 may determine a target temperature, the target of the controlling, based on the temperature profile. The controller 12 may control the power supplied to the heater 18 using the PID scheme, which is a feedback control scheme through the difference value between the temperature of the heater 18 and the target temperature, the value obtained by integrating the difference value over time, and the value obtained by differentiating the difference value over time.

The controller 12 may prevent overheating of the cartridge heater 24 and/or the heater 18. For example, the controller 12 may control the operation of the power conversion circuit to stop supplying power to the cartridge heater 24 and/or the heater 18 based on the temperature of the cartridge heater 24 and/or the heater 18 exceeding a preset temperature limit. For example, the controller 12 may reduce the amount of power supplied to the cartridge heater 24 and/or the heater 18 by a predetermined proportion, based on the temperature of the cartridge heater 24 and/or the heater 18 exceeding the preset temperature limit. For example, the controller 12 may determine that the aerosol generating material accommodated in the cartridge 19 is exhausted based on the temperature of the cartridge heater 24 exceeding the temperature limit, and cut off the power supply to the cartridge heater 24.

The controller 12 may control the charging and discharging of the power source 11. The controller 12 may verify the temperature of the power source 11 based on an output signal from the temperature sensor 131.

When a power line is connected to a battery terminal of the aerosol generating device 1, the controller 12 may verify whether the temperature of the power source 11 is greater than or equal to a first temperature limit which is the criterion for cutting off the charging of the power source 11. The controller 12 may control the power source 11 to be charged based on a preset charging current when the temperature of the power source 11 is less than the first temperature limit. The controller 12 may cut off the charging of the power source 11 when the temperature of the power source 11 is greater than or equal to the first temperature limit.

In a state in which the aerosol generating device 1 is powered on, the controller 12 may verify whether the temperature of the power source 11 is greater than or equal to a second temperature limit which is the criterion for cutting off the discharging of the power source 11. The controller 12 may control the power stored in the power source 11 to be used when the temperature of the power source 11 is less than the second temperature limit. The controller 12 may stop using the power stored in the power source 11 when the temperature of the power source 11 is greater than or equal to the second temperature limit.

The controller 12 may calculate the remaining capacity for the power stored in the power source 11. For example, the controller 12 may calculate the remaining capacity of the power source 11 based on the voltage of the power source 11 and/or the value of current sensed.

The controller 12 may determine whether the stick S is inserted into the insertion space through the insertion detection sensor 133. The controller 12 may determine that the stick S is inserted based on an output signal from the insertion detection sensor 133. When it is determined that the stick S is inserted into the insertion space, the controller 12 may control to supply power to the cartridge heater 24 and/or the heater 18. For example, the controller 12 may supply power to the cartridge heater 24 and/or the heater 18 based on the temperature profile stored in the memory 17.

The controller 12 may determine whether the stick S is removed from the insertion space. For example, the controller 12 may determine whether the stick S is removed from the insertion space through the insertion detection sensor 133. For example, the controller 12 may determine that the stick S is removed from the insertion space when the temperature of the heater 18 is greater than or equal to a temperature limit or when the gradient of the temperature change of the heater 18 is greater than or equal to a set gradient. When it is determined that the stick S is removed from the insertion space, the controller 12 may cut off the supply of power to the cartridge heater 24 and/or the heater 18.

The controller 12 may control the time of power supply and/or the amount of power supply to the heater 18 depending on the state of the stick S sensed by the sensor 13. The controller 12 may verify a level range including the level of a signal of the capacitance sensor based on a lookup table. The controller 12 may determine the amount of moisture in the stick S according to the verified level range.

When the stick S is in an over-humidified state, the controller 12 may increase the preheating time of the stick S compared to the case in which the stick S is in a normal state, by controlling the time of power supply to the heater 18.

The controller 12 may determine whether the stick S inserted into the insertion space is reused through the reuse detection sensor 134. For example, the controller 12 may compare a sensed value of a signal of the reuse detection sensor with a first reference range including a first color, and when the sensed value falls within the first reference range, determine that the stick S is unused. For example, the controller 12 may compare the sensed value of the signal of the reuse detection sensor with a second reference range including a second color, and when the sensed value falls within the second reference range, determine that the stick S is used. When it is determined that the stick S is used, the controller 12 may cut off the supply of power to the cartridge heater 24 and/or the heater 18.

The controller 12 may determine whether the cartridge 19 is coupled and/or decoupled, through the cartridge detection sensor 135. For example, the controller 12 may determine whether the cartridge 19 is coupled and/or decoupled based on a sensed value of a signal of the cartridge detection sensor.

The controller 12 may determine whether the aerosol generating material in the cartridge 19 is exhausted. For example, the controller 12 may preheat the cartridge heater 24 and/or the heater 18 by applying power, determine whether the temperature of the cartridge heater 24 exceeds the temperature limit in a preheating period, and determine that the aerosol generating material in the cartridge 19 is exhausted when the temperature of the cartridge heater 24 exceeds the temperature limit. When it is determined that the aerosol generating material in the cartridge 19 is exhausted, the controller 12 may cut off the supply of power to the cartridge heater 24 and/or the heater 18.

The controller 12 may determine whether the cartridge 19 is usable. For example, the controller 12 may determine that the cartridge 19 is unusable when the current number of puffs is greater than or equal to the maximum number of puffs set in the cartridge 19 based on the data stored in the memory 17. For example, the controller 12 may determine that the cartridge 19 is unusable when the total time for which the heater 24 is heated is greater than or equal to a preset maximum time or when the total amount of power supplied to the heater 24 is greater than or equal to a preset maximum amount of power.

The controller 12 may perform a determination about the inhalation of the user through the puff sensor 132. For example, the controller 12 may determine whether a puff occurs based on a sensed value of a signal of the puff sensor. For example, the controller 12 may determine the strength of the puff based on the sensed value of the signal of the puff sensor 132. When the number of puffs reaches the preset maximum number of puffs or when a puff is not detected for more than a preset time, the controller 12 may cut off the supply of power to the cartridge heater 24 and/or the heater 18.

The controller 12 may determine whether the cap is put on and/or taken off, through the cap detection sensor 136. For example, the controller 12 may determine whether the cap is put on and/or taken off based on a sensed value of a signal of the cap detection sensor.

The controller 12 may control the output unit 14 based on a result of sensing by the sensor 13. For example, when the number of puffs counted through the puff sensor 132 reaches a preset number, the controller 12 may inform the user that the aerosol generating device 1 is to be ended soon, through at least one of the display 141, the haptic portion 142, or the sound outputter 143. For example, the controller 12 may inform the user through the output unit 14 based on the determination that the stick S is absent from the insertion space. For example, the controller 12 may inform the user through the output unit 14 based on the determination that the cartridge 19 and/or the cap is not mounted. For example, the controller 12 may provide information on the temperature of the cartridge heater 24 and/or the heater 18 to the user through the output unit 14.

Based on the occurrence of a predetermined event, the controller 12 may store and update the history of the event that occurred in the memory 17. The event may include the detection of inserting the stick S, the initiation of heating the stick S, the detection of puffs, the end of puffs, the detection of overheating of the cartridge heater 24 and/or the heater 18, the detection of applying overvoltage to the cartridge heater 24 and/or the heater 18, the end of heating the stick S, the operation of powering ON/OFF the aerosol generating device 1, initiation of charging the power source 11, the detection of overcharging of the power source 11, the end of charging the power source 11, or the like, performed by the aerosol generating device 1. The history of the event may include the date and time the event occurred, log data corresponding to the event, and the like. For example, when the predetermined event is the detection of inserting the stick S, the log data corresponding to the event may include data on the sensed value of the insertion detection sensor 133. For example, when the predetermined event is the detection of overheating of the cartridge heater 24 and/or the heater 18, the log data corresponding to the event may include data on the temperature of the cartridge heater 24 and/or the heater 18, the voltage applied to the cartridge heater 24 and/or the heater 18, the current flowing in the cartridge heater 24 and/or the heater 18, and the like.

The controller 12 may control to form a communication link with an external device, such as a mobile terminal of the user. When authentication data is received from the external device via the communication link, the controller 12 may remove restrictions on the use of at least one function of the aerosol generating device 1. Here, the authentication data may include data indicating the completion of user authentication for the user corresponding to the external device. The user may perform user authentication through the external device. The external device may determine whether user data is valid based on the date of birth of the user, a unique number that identifies the user, and the like and receive data on the authority to use the aerosol generating device 1 from an external server. The external device may transmit data indicating the completion of user authentication to the aerosol generating device 1 based on the data on the authority to use. In response to the completion of the user authentication, the controller 12 may remove restrictions on the use of at least one function of the aerosol generating device 1. For example, in response to the completion of the user authentication, the controller 12 may remove restrictions on the use of a heating function that supplies power to the heater 18.

The controller 12 may transmit state data of the aerosol generating device 1 to the external device via the communication link with the external device. Based on the received state data, the external device may output the remaining capacity, the operation mode, and the like of the power source 11 of the aerosol generating device 1 through a display of the external device.

The external device may transmit a location search request to the aerosol generating device 1 based on an input that initiates a search for the location of the aerosol generating device 1. When the location search request is received from the external device, the controller 12 may control at least one of output devices to perform an operation corresponding to the location search based on the received location search request. For example, in response to the location search request, the haptic portion 142 may generate vibrations. For example, in response to the location search request, the display 141 may output an object corresponding to the location search and the end of the search.

When firmware data is received from the external device, the controller 12 may control to perform a firmware update. The external device may check the current version of the firmware for the aerosol generating device 1 and determine whether a new version of the firmware is present. When an input that requests a firmware download is received, the external device may receive a new version of firmware data and transmit the new version of firmware data to the aerosol generating device 1. When the new version of firmware data is received, the controller 12 may control to update the firmware of the aerosol generating device 1.

The controller 12 may transmit data on the sensed value of at least one sensor 13 through the communication unit 16 to an external server (not shown), receive a training model generated by being trained with the sensed value through machine learning such as deep learning from the external server, and store the training model. The controller 12 may perform an operation of determining an inhalation pattern of the user, an operation of generating a temperature profile, and the like using the training model received from the external server. The controller 12 may store, in the memory 17, the sensed value data of at least one sensor 13 and the data used to train an artificial neural network (ANN). For example, the memory 17 may store a database for each component provided in the aerosol generating device 1, weights that form the structure of the ANN, and biases, for training the ANN. The controller 12 may generate at least one training model that learns the data on the sensed value of at least one sensor 13, the inhalation pattern of the user, the temperature profile, and the like, stored in the memory 17, and is used to determine the inhalation pattern of the user and generate the temperature profile.

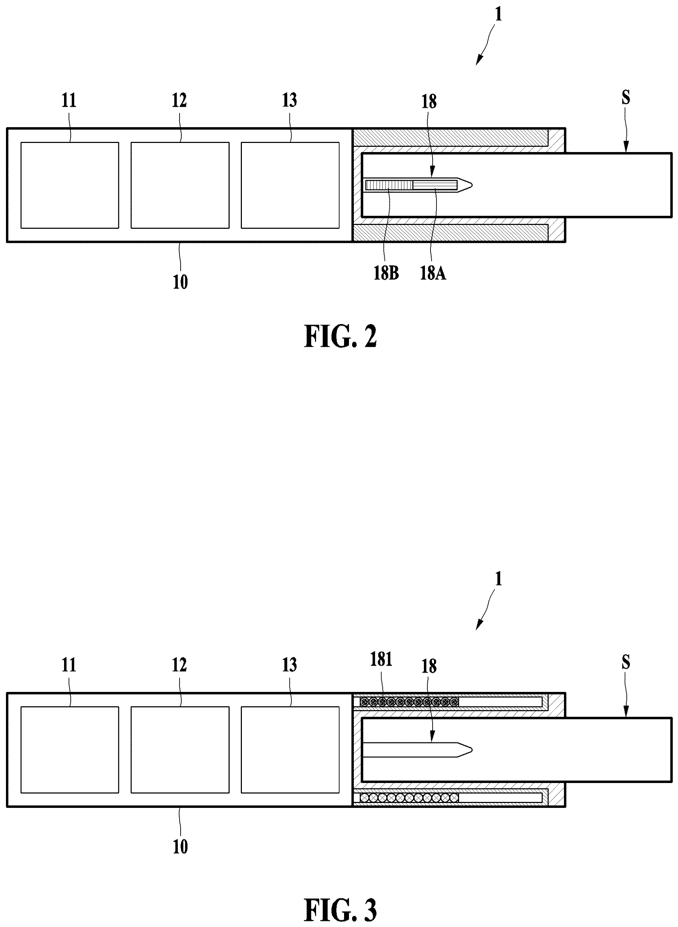

FIGS. 2 to 4 illustrate an aerosol generating device according to various embodiments of the present disclosure.

Referring to FIG. 2, according to embodiments of the present disclosure, the aerosol generating device 1 may include at least one of the power source 11, the controller 12, the sensor 13, and the heater 18. At least one of the power source 11, the controller 12, the sensor 13, and the heater 18 may be disposed inside the body 10 of the aerosol generating device 1. The body 10 may provide an upward-opening space into which the stick S, an aerosol generating article, is inserted. The upward-opening space may be referred to as an insertion space. The insertion space may be recessed by a predetermined depth toward the inside of the body 10 such that at least a portion of the stick S may be inserted into the insertion space. The depth of the insertion space may correspond to a length of an area of the stick S in which an aerosol generating material and/or a medium is included. A lower end of the stick S may be inserted into the body 10, and an upper end of the stick S may protrude outward from the body 10. A user may hold the upper end of the stick S, which is exposed to the outside, in the mouth of the user and inhale air.

The heater 18 may heat the stick S. The heater 18 may be elongated upward in the space into which the stick S is inserted. For example, the heater 18 may include a tubular heating element, a plate-shaped heating element, a needle-shaped heating element, or a rod-shaped heating element. The heater 18 may be inserted into a lower portion of the stick S. The heater 18 may include an electrically resistive heater and/or an induction heater.

For example, referring to FIG. 2, the heater 18 may be a resistive heater. For example, the heater 18 may include an electrically conductive track, and the heater 18 may be heated up as a current flows through the electrically conductive track. The heater 18 may be electrically connected to the power source 11. The heater 18 may directly generate heat by receiving a current from the power source 11.

For example, the heater 18 may be a multi-heater. The heater 18 may include a first heater 18A and a second heater 18B. The first and second heaters 18A and 18B may be disposed side by side in a longitudinal direction. The first and second heaters 18A and 18B may be heated sequentially or simultaneously.

For example, referring to FIG. 3, the aerosol generating device 1 may include the induction coil 181 surrounding the heater 18. The induction coil 181 may heat the heater 18. As a susceptor, the heater 18 may be heated up by a magnetic field generated by an alternating current (AC) flowing through the induction coil 181. The magnetic field may pass through the heater 18 and generate an eddy current in the heater 18. A current may generate heat in the heater 18.

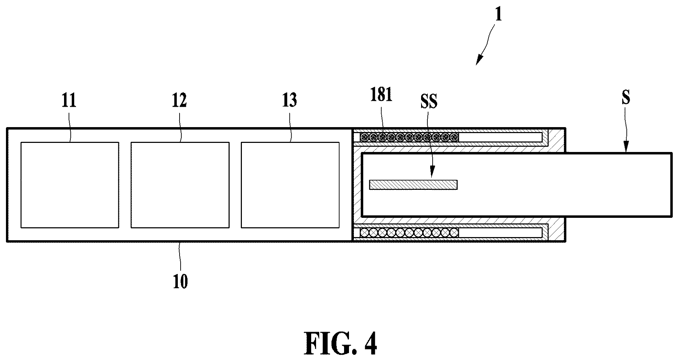

For example, referring to FIG. 4, a susceptor SS may be included in the stick S, and the susceptor SS inside the stick S may be heated by the magnetic field generated by the AC flowing through the induction coil 181. The susceptor SS may be disposed inside the stick S and may not be electrically connected to the aerosol generating device 1. The susceptor SS may be inserted into the insertion space together with the stick S and may be removed from the insertion space together with the stick S. The stick S may be heated by the susceptor SS inside the stick S. In this case, the heater 18 may not be provided to the aerosol generating device 1.

The power source 11 may supply power to operate the components of the aerosol generating device 1. The power source 11 may be referred to as a battery. The power source 11 may supply power to at least one of the controller 12, the sensor 13, or the heater 18. The power source 11 may supply power to the induction coil 181.

The controller 12 may control the overall operation of the aerosol generating device 1. The controller 12 may be mounted on a PCB. The controller 12 may control the operation of at least one of the power source 11, the sensor 13, or the heater 18. The controller 12 may control the operation of the induction coil 181. The controller 12 may control the operation of the display, a motor, and the like installed in the aerosol generating device 1. The controller 12 may verify a state of each of the components of the aerosol generating device 1 to determine whether the aerosol generating device 1 is in an operable state.

The controller 12 may analyze a sensing result obtained by the sensor 13 and may control processes to be performed thereafter. For example, based on the sensing result obtained by the sensor 13, the controller 12 may control the power supplied to the heater 18 to initiate or terminate the operation of the heater 18. For example, based on the sensing result obtained by the sensor 13, the controller 12 may control the amount of power supplied to the heater 18 and a time for which the power is supplied, such that the heater 18 may be heated to a predetermined temperature or maintained at an appropriate temperature.

The sensor 13 may include at least one of a temperature sensor, a puff sensor, a insertion detection sensor, or an acceleration sensor. For example, the sensor 13 may sense at least one of the temperature of the heater 18, the temperature of the power source 11, or the temperature inside and outside the body 10. For example, the sensor 13 may sense a puff of the user. For example, the sensor 13 may sense whether the stick S is inserted into the insertion space. For example, the sensor 13 may sense a motion of the aerosol generating device 1.

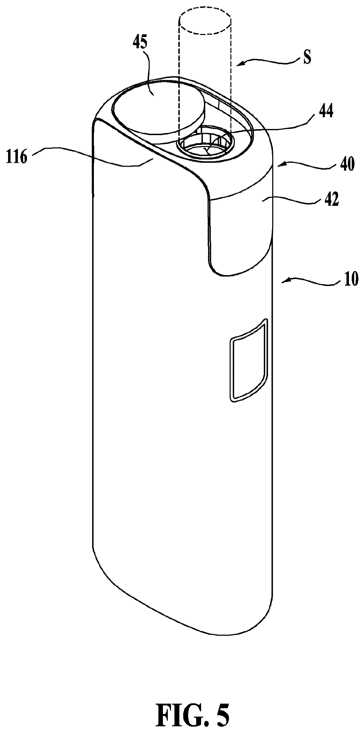

FIG. 5 is a front perspective view of an aerosol generating device according to embodiments of the present disclosure.

Referring to FIG. 5, an upper case 40 may be detachably coupled to the body 10. The upper case 40 may be coupled to an upper side of the body 10. The upper case 40 may cover the vicinity of an upper portion of the body 10. The upper case 40 may have an insertion hole 44. The stick S may be inserted into the insertion hole 44. The upper case 40 may include a cap 45 that opens and closes the insertion hole 44. The cap 45 may slide horizontally to open and close the insertion hole 44.

The upper case 40 may include an upper case wing 42. The upper case wing 42 may extend downward from both sides of an upper case body 41. The upper case wing 42 may be referred to as an upper case grip 42.

The body 10 may include a body wing 116. The body wing 116 may extend upward from an edge of the upper portion of the body 10. A pair of body wings 116 may be formed opposite to each other with respect to the upper portion of the body 10 The body wing 116 may be positioned in a way that is not aligned with the upper case wing 42.

When the upper case 40 is coupled to the body 10, the upper case 40 may form the upper exterior of the aerosol generating device. When the upper case 40 is coupled to the body 10, the body wing 116 may cover a side portion of the upper case 40 exposed between the upper case wings 42. When the upper case 40 is coupled to the body 10, the upper case wing 42 may cover an outer wall of the body 10.

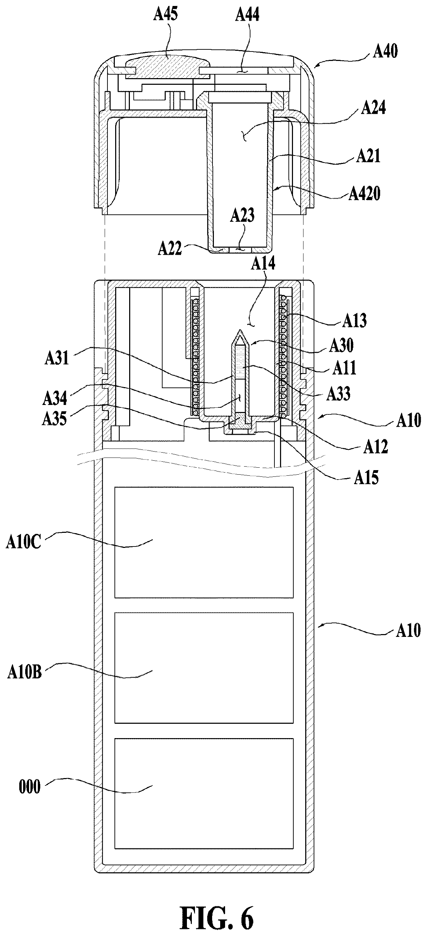

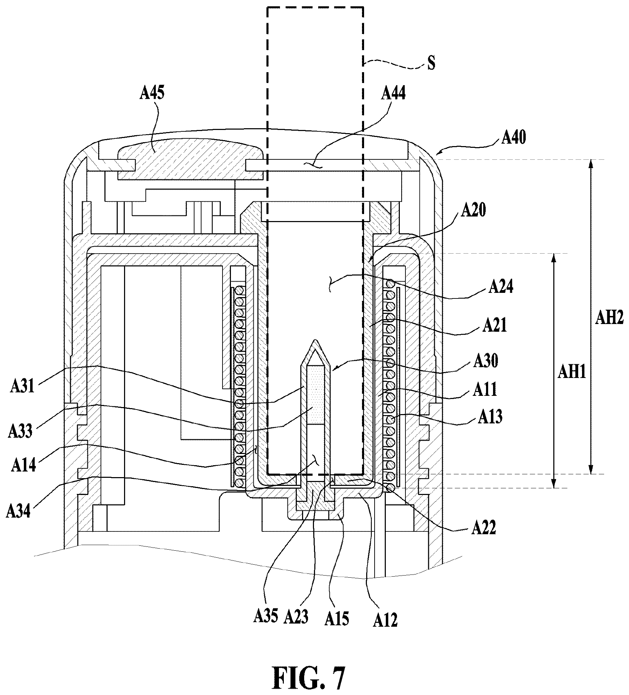

FIG. 6 is an exploded cross-sectional view of an upper case and a body of an aerosol generating device according to an embodiment of the present disclosure, and FIG. 7 is an assembled cross-sectional view of the upper case and the body of the aerosol generating device according to an embodiment of the present disclosure.

Referring to FIG. 6, the aerosol generating device according to an embodiment of the present disclosure may include at least one of a battery A101, a controller A102, and a sensor A103. At least one of the battery A101, the controller A102, and the sensor A103 may be disposed inside a body A10 of the aerosol generating device. The description of the battery 101, the controller 102, and the sensor 103 provided above with reference to FIGS. 1 and 2 may apply to the description of the features of the battery A101, the controller A102, and the sensor A103.

The body A10 may include pipes A11 and A12 that form a first insertion space A14. The first insertion space A14 may be formed in an upper portion of the body A10. The first insertion space A14 may be open upward. The first insertion space A14 may have a vertically elongated cylindrical shape. A first lateral wall A11 of the pipes A11 and A12 may surround a side portion of the first insertion space A14. A first flange A12 of the pipes A11 and A12 may cover a lower portion of the first insertion space A14.

An extractor A20 may have a second insertion space A24 therein. The second insertion space A24 may be open toward an upper side of the extractor A20. The second insertion space A24 may have a vertically elongated cylindrical shape. A second lateral wall A21 of the extractor A20 may surround a side portion of the second insertion space A24. A second flange A22 of the extractor A20 may cover a lower portion of the second insertion space A24. The center of the second flange A22 may be open, forming a through hole A23.

Referring to FIG. 7, the extractor A20 may be inserted into the first insertion space A14. When the extractor A20 is inserted into the first insertion space A14, the second insertion space A24 may be disposed inside the first insertion space A14. The second insertion space A24 may be open toward the upper side of the body 10. The diameter of the second insertion space A24 may be less than the diameter of the first insertion space A14. The first insertion space A14 and the second insertion space A24 may communicate with each other via the through hole A23.

A heater assembly A30 may be secured to the body A10. The heater assembly A30 may be elongated and protrude upward from the first flange A12 in the first insertion space A14. The heater assembly A30 may pass through the through hole A23. An upper portion of the heater assembly A30 may be disposed inside the second insertion space A24 via the through hole A23. The heater assembly A30 may heat the second insertion space A24.

The heater assembly A30 may include a heater rod A31 and a heater A33. The heater rod A31 may protrude upward from the first flange A12 to the first insertion space A14. The heater rod A31 may be elongated vertically. A body of the heater rod A31 may have a cylindrical shape. An upper end of the heater rod A31 may have an upward-pointy shape.

The heater A33 may be inserted into a hollow A34 of the heater rod A31. The heater A33 may be secured to the inside of the heater rod A31. The hollow A34 may be open downward and may be filled by a heater cap A35. The first flange A12 may be recessed downward, forming a heater mount A15. A lower end of the heater rod A31 and the heater cap A35 may be secured to the heater mount A15.

The heater A33 may be a resistive heater. When the heater A33 is heated, heat may pass through the heater rod A31 and heat the second insertion space A24. An induction coil A13 may heat the heater A33. The induction coil A13 may be vertically wound around the perimeter of the first lateral wall A11 and may surround the first insertion space A14 and the heater A33. As a susceptor, the heater A33 may be heated up by a magnetic field generated by an AC flowing through the induction coil A13. The magnetic field may pass through the heater A33 and may generate an eddy current in the heater A33. A current may generate heat in the heater A33. Alternatively, unlike the drawing, the heater A33 may directly receive power and generate heat.

An upper case A40 may be detachably coupled to the body A10. The upper case A40 may cover the upper portion of the body A10 around the first insertion space A14. The extractor A20 may be coupled to the upper case A40 and move integrally with the upper case A40. When the upper case A40 is coupled to the body A10, the extractor A20 may be inserted into the first insertion space A14, and the heater assembly A30 may be positioned inside the second insertion space A24 by passing through the through hole A23 of the second flange A22.

The upper case A40 may have an insertion hole A44. The insertion hole A44 may be aligned with the second insertion space A24 on an upper side of the second insertion space A24 of the extractor A20. The insertion hole A44 may have a circular horizontal cross-section. A cover A45 may be movably installed on the upper case A40. The cover A45 may open and close the insertion hole A44 and the second insertion space A24.

The sensor A103 may sense the temperature of the heater A33. The controller A102 may control the temperature of the heater A33 based on the temperature of the heater A33 sensed by the sensor A103.

The stick S may be inserted into the second insertion space A24. The stick S may be inserted into the second insertion space A24 by passing through the insertion hole A44. An upper side of the stick S may be exposed upward from the extractor A20 and the upper case A40. The stick S may be supported by the second lateral wall A21 and the second flange A22 in the second insertion space A24. The heater rod A31 passing through the through hole A23 may be inserted into the lower portion of the stick S inserted into the second insertion space A24. The stick S may be heated by the heater A33 inside the heater rod A31, generating an aerosol.

A user may hold one end of the stick S, which is exposed to the outside, in the mouth of the user and inhale air. The air, accompanied by an aerosol, may enter the stick S through the through hole A23 and may be provided to the user.

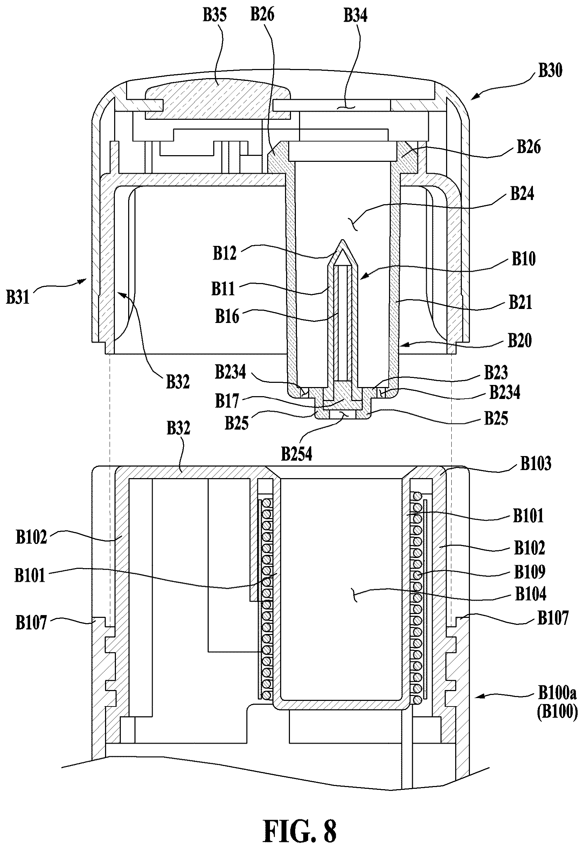

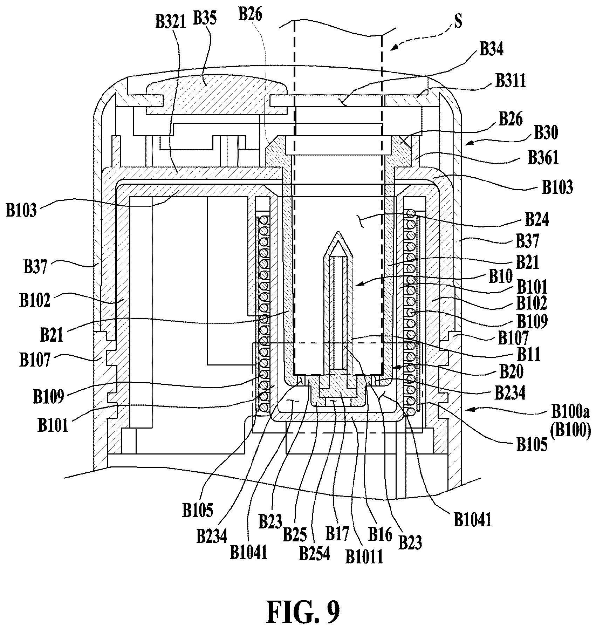

FIG. 8 is an exploded cross-sectional view of an upper case and a body of an aerosol generating device according to another embodiment of the present disclosure, and FIG. 9 is an assembled cross-sectional view of the upper case and the body of the aerosol generating device according to another embodiment of the present disclosure.

Referring to FIG. 8, in the aerosol generating device according to another embodiment of the present disclosure, a heater assembly B10 may be elongated vertically. The heater assembly B10 may have a cylindrical shape. An upper end portion of the heater assembly B10 may have a pointy shape. The heater assembly B10 may have a space into which a heater B16 may be inserted inside. The heater assembly B10 may be highly heat-resistant. For example, the heater assembly B10 may be made of a ceramic material.

The heater assembly B10 may have heater pins B11 and 12. The heater pins B11 and 12 may have a pin body B11. The pin body B11 may be elongated vertically. The pin body B11 may have a cylindrical shape. The inside of the pin body B11 may be a hollow B14. A lower portion of the heater assembly B10 may be open and communicate with the hollow B14. The hollow B14 may be elongated vertically.

The heater pins B11 and 12 may have a pin tip B12. The pin tip B12 may form an upper end of the heater assembly B10. The pin tip B12 may be formed integrally with the pin body B11 on an upper side of the pin body B11. The pin tip B12 may have a shape that gradually narrows toward an upper side of the pin tip B12. The pin tip B12 may have a pointy top. Accordingly, the heater assembly B10 may secure the stick S by passing through the stick S.

The heater B16 may be elongated vertically. The heater B16 may be inserted into the hollow B14 of the heater assembly B10. As a magnetic body, the heater B16 may be heated by an induced current. The heater B16 may have a rolled thin plate shape. The heater B16 may have a cylindrical shape with one side cut vertically.

A reinforcement B17 may block or fill an opening of the hollow B14. The reinforcement B17 may be disposed on a lower side of the heater B16. The reinforcement B17 may support a lower portion of the heater B16 in the hollow B14.

A pipe B20 may have a pipe body B21. The pipe body B21 may be elongated vertically. The pipe body B21 may be formed in a hollow cylindrical shape. The pipe body B21 may provide an insertion space B24 that open upward.

The pipe B20 may have a caught protrusion B26. The caught protrusion B26 may protrude in a horizontal direction or outer radial direction from an outer circumferential surface of a rim formed on an upper portion of the pipe B20. A plurality of caught protrusions B26 may be provided. The plurality of caught protrusions B26 may be spaced apart from each other in a circumferential direction along the circumference of the rim.

The pipe B20 may have a bottom portion B23. The bottom portion B23 may be formed on a lower portion of the pipe B20. The bottom portion B23 may be positioned on a lower side of the pipe body B21. The bottom portion B23 may be formed integrally with the pipe body B21. The bottom portion B23 may cover a lower portion or bottom of the insertion space B24. The bottom portion B23 may be referred to as the bottom B23 of the pipe B20.

The bottom portion B23 may be open, forming an inlet B234. The inlet B234 may be positioned on a lower side of the insertion space B24. The inlet B234 may be open toward the insertion space B24. The inlet B234 may communicate with the insertion space B24. The inlet B234 may allow the insertion space B24 to communicate with the outside.

The pipe B20 may have a mount B25. The mount B25 may protrude downward from the bottom portion B23. The mount B25 may be formed at the center of the bottom portion B23. A lower portion of the mount B25 may be open, forming a mount hole B254.

A plurality of inlets B234 may be provided. The plurality of inlets B234 may be formed around the mount B25. The plurality of inlets B234 may be spaced apart from each other in a circumferential direction around the mount B25. The plurality of inlets B234 may be arranged radially around the mount B25. The inlet B234 may be positioned above a lower end of the mount B25.

The heater assembly B10 may be secured to the pipe B20. The lower portion of the heater assembly B10 may be secured to the bottom portion B23 or the vicinity of the bottom portion B23, and an upper portion of the heater assembly B10 may protrude into the insertion space B24.

A flange B15 and the reinforcement B17 may be inserted and coupled to a mount groove of the mount B25. The mount B25 and the bottom portion B23 may be an elastic body with some elasticity. For example, the pipe B20 may be made of plastic. When the flange B15 and the reinforcement B17 are inserted into the mount groove, the shape of a mount around the mount groove may be deformed before returning to its original shape, allowing the flange B15 and the reinforcement B17 to be pressed into the mount groove. The flange B15 and the reinforcement B17 may bond with each other and be coupled to the mount B25.

The pin body B11 may be disposed in the insertion space B24. The pin body B11 may be disposed along the longitudinal direction of the insertion space B24. The pin tip B12 may face toward an opening of the insertion space B24.

Accordingly, the heater assembly B10 may be secured to the pipe B20. In addition, the heater assembly B10 may be prevented from rotating in a circumferential direction. Furthermore, vertical removal of the heater assembly B10 from the pipe B10 may be prevented.

The heater B16 may be spaced at a predetermined height from an upper surface of the bottom portion B23. Accordingly, it may be possible to reduce the effect of heat generated by the heater B16 on the bottom portion B23 of the pipe B20. In addition, it may be possible to prevent formation or widening of a gap between the pipe B20 and the heater assembly B10 due to the thermal deformation of the bottom portion B23 of the pipe B20, and to prevent leakage of foreign substances such as a liquid from the gap.

The pipe B20 may be coupled to an upper case B30. The upper case B30 may have an insertion hole B34 communicating with the insertion space B24. A first upper case B31 may be coupled to a second upper case B32, forming the upper case B30. The first upper case B31 may form the exterior of the upper case B30, and the second upper case B32 may form the interior of the upper case B30. The first upper case B31 may be coupled to an upper or outer side of the second upper case B32. The rim and the caught protrusion B26 of the pipe B20 may be coupled to each other by being disposed between the first upper case B31 and the second upper case B32.

The first upper case B31 may have an upper frame B311. The upper frame B311 may be parallel to the pipe B20 in a horizontal direction. The upper frame B311 may form the upper exterior of the upper case B30. One side of the upper frame B311 may be open, forming the insertion hole B34.

The upper case B30 may have a cap B35 that opens and closes the insertion hole B34. The cap B35 may be movably installed on the upper frame B311 of the upper case B30. An upper portion of the cap B35 may be exposed to the outside of the first upper case B31. A lower portion of the cap B35 may be disposed between the first upper case B31 and the second upper case B32. When the cap B35 opens the insertion hole B34, the insertion space B24 may also be open towards the outside through the insertion hole B34. When the cap B35 closes the insertion hole B34, the insertion space B24 may also be closed by the cap B35. The cap B35 may slidably or pivotally move. Accordingly, the pipe B20 may move along with the upper case B30. In addition, the pipe B20 may be prevented from rotating around the upper case B30 in a circumferential direction.

A body B100 may have a pipe groove B104. An upper surface B103 of the body B100 may be recessed downward, forming the pipe groove B104. The pipe groove B104 may be open upward. The pipe groove B104 may be elongated vertically. The pipe groove B104 may be referred to as a groove B104.

Referring to FIG. 9, the upper case B30 may cover an upper portion of the body B100. The upper case B30 may wrap and cover the body B100 around the groove B104. The upper case B30 may be detachably coupled to the body B100. When the upper case B30 is coupled to the body B100, the pipe B20 may be inserted into the pipe groove B104.

A body cover B107 may surround a side portion of the body B100. The body cover B107 may protrude upward from an edge of the body B100, surpassing the upper surface B103 of the body B100. The body cover B107 may form a cover groove, into which an upper case cover B37 may be inserted, at one side and the other side of the body B100. The cover groove may be in contact with a side portion B102 of the body B100. The cover groove may have a shape and arrangement corresponding to those of the upper case cover B37. The upper case cover B37 may be in contact with the body cover B107 and guided for insertion into the cover groove.

When the upper case B30 is coupled to the body B100, a lower frame B321 of the upper case B30 may cover the upper surface B103 of the body B100. When the upper case B30 is coupled to the body B100, the upper case cover B37 may be inserted into the cover groove and cover side surfaces B102 of the body B100.

A user may open the insertion hole B34 and the insertion space B24 by moving the cap B35. The stick S may be inserted into the insertion hole B34 and the insertion space B24 and protrude to an upper side of the upper case B30. The user may hold the stick S in the mouth of the user and inhale air.

Accordingly, the user may detach both the upper case B30 and the pipe B20 from the body B100. In addition, as the pipe B20 is detached from the body B100, it may be easy to clean the inside of the pipe B20. In addition, it may be possible to prevent a foreign substance from entering around the pipe B20 and the groove B104 of the body B100 through the upper case B30.

The body B100 may have a container B101. The container B101 may provide the pipe groove B104. The pipe groove B104 may be surrounded by the container B101. The pipe groove B104 may be elongated vertically. The pipe groove B104 may be open upward. A container bottom B1011 may cover a lower portion of the pipe groove B104. The container bottom B1011 may be the bottom B1011 of the pipe groove B104. When the upper case B30 is coupled to the body B100, the pipe B20 may be inserted into the pipe groove B104.

An induction coil B109 may wrap the container B101 by winding around the container B101 multiple times. The induction coil B109 may be disposed from the vicinity of the container bottom B1011 to the vicinity of an opening of the pipe groove B104. When the upper case B30 is coupled to the body B100, the heater B16 may be disposed in the pipe groove B104, and the induction coil B109 may surround the periphery of the heater B16. The heater B16 may be heated by the induction coil B109.

A sensor B105 may be disposed inside the body B100. The sensor B105 may sense information, such as the temperature of the heater B16, whether a stick BS is inserted into the insertion space B24, whether the pipe B20 is inserted into the pipe groove B104, and the like. The sensor B105 may sense the information according to a change in the permittivity inside the pipe groove B104. For example, the sensor B105 may be a capacitance sensor. The sensor B105 may be installed around the pipe groove B104.

For example, the sensor B105 may indirectly estimate the temperature of the heater B16 by detecting a change in the permittivity around the heater B16. For example, a memory installed inside a device may store information about a look-up table regarding the correlation between a permittivity change around the heater B16 sensed by the sensor B105 and the heating temperature of the heater B16. For example, a controller installed inside the device may receive a signal about the permittivity change from the sensor B105 and estimate the temperature of the heater B16 using the look-up table.

Accordingly, the sensor B105 may sense the temperature of the heater B16 without a lead wire extending from the heater B16 to the inside of the body B100.

An inner circumferential surface of the pipe body B21 may have a tapered shape that gradually narrows from the vicinity of the insertion hole B34 toward the bottom portion B23 of the pipe B20. The stick S may pass through the insertion hole B34 and be guided by the inner circumferential surface of the pipe body B21 such that the stick S is seated in the insertion space B24.

When the upper case B30 is coupled to the body B100, the upper case B30 may separate the pipe B20 from the container B101.

When the pipe B20 is inserted into the pipe groove B104, the mount B25 may be positioned on the lower portion of the pipe groove B104. The mount B25 may be spaced upward by a first distance from the container bottom B1011. The inlet B234 may be spaced upward by a second distance from the container bottom B1011. The second distance may be greater than the first distance.

A side portion of the pipe body B21 may be spaced apart from a side portion of the container B101. A first flow path B1041 may be formed between the side portion of the pipe body B21 and the side portion of the container B101. The first flow path B1041 may surround the pipe body B21 in a circumferential direction. The first flow path may be formed at one side of the pipe groove B104.

A second flow path B1041 may be formed between a lower portion of the inlet B234 and a lower portion of the container B101. The second flow path B1041 may be surrounded by the lower portion of the container B101, the mount B25, and the bottom portion B23 of the pipe B20. The second flow path B1041 may surround the vicinity of the mount B25 in a circumferential direction. The second flow path B1041 may communicate with the first flow path. The second flow path B1041 may be positioned at a lower side of the first flow path. The second flow path B1041 may be positioned at a lower side of the inlet B234. The second flow path B1041 may communicate with the inlet B234. The second flow path B1041 may be formed at the other side of the pipe groove B104. The second flow path B1041 may be referred to as an inflow chamber B1041.

When the user inhales air, the air may enter the second flow path B1041 from the first flow path. The air entering the second flow path B1041 may pass through the inlet B234 and may be supplied to the stick S inserted into the insertion space B24.

Accordingly, it may be possible to prevent a lower portion of the pipe B20, such as the mount B25 or the bottom portion B23, from being contaminated by a foreign substance, such as a liquid, on the bottom of the container B101. In addition, the air may be collected in the second flow path B1041 and then enter the inlet B234, stabilizing the airflow and improving flow efficiency.

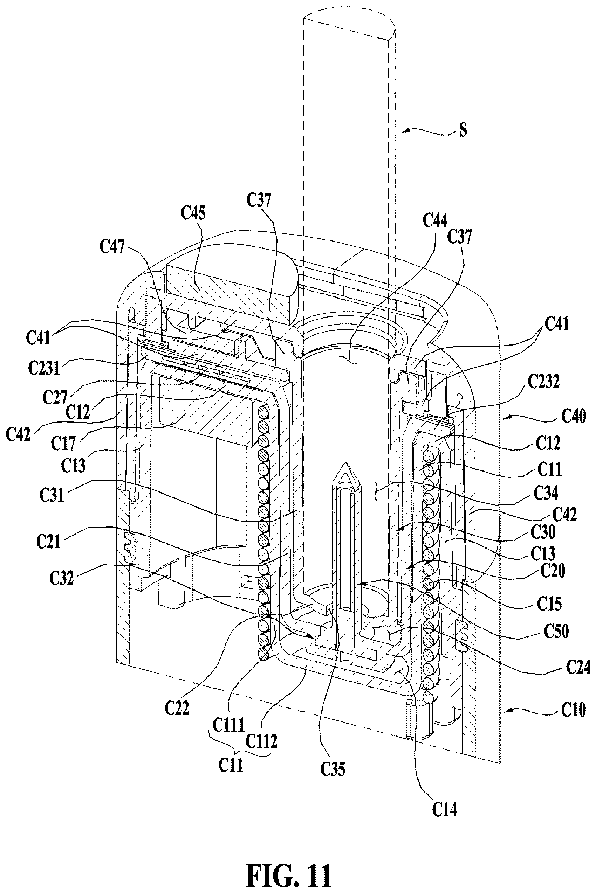

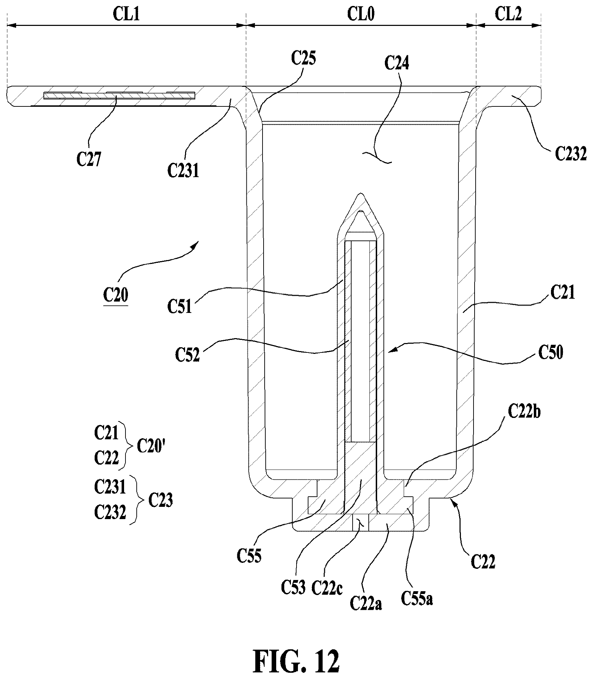

FIG. 10 is an exploded cross-sectional view of an upper case, a body, and a heater holder of an aerosol generating device according to another embodiment of the present disclosure, FIG. 11 is an assembled cross-sectional view of the upper case, the body, and the heater holder of the aerosol generating device according to another embodiment of the present disclosure, and FIG. 12 is a cross-sectional view of the heater holder of the aerosol generating device according to another embodiment of the present disclosure.

Referring to FIG. 10, the aerosol generating device according to another embodiment of the present disclosure may have a body C10 that is elongated vertically. The body C10 may provide a first insertion space C14 inside. The first insertion space C14 may be open upward. The first insertion space C14 may have a vertically elongated cylindrical shape. The first insertion space C14 may be defined by a body pipe C11 formed inside the body C10. The body pipe C11 may include a lateral wall C111 surrounding the perimeter of the first insertion space C14 and a lower wall C112 covering the bottom of the first insertion space C14. The lower wall C112 may be formed at the bottom of the body pipe C11. The lateral wall C111 of the body pipe C11 may be referred to as an inner lateral wall C111 of the body C10.

A heater holder C20 may be detachably inserted into the first insertion space C14. The heater holder C20 may have a second insertion space C24 inside. The second insertion space C24 may be open upward. The second insertion space C24 may have a cylindrical shape. The second insertion space C24 may be defined by a pipe C20' of the heater holder C20. The pipe C20' may include a lateral wall C21 surrounding the perimeter of the second insertion space C24 and a lower wall C22 covering the bottom of the second insertion space C24. The lower wall C22 of the pipe C20' may be referred to as a bottom C22 or a mount C22. The lower wall C22 of the pipe C20' may form the bottom C22 of the heater holder C20. A heater C50 may be coupled or secured to the heater holder C20. The pipe C20' may be referred to as a heater holder pipe C20'.

An extractor C30 may be detachably inserted into the second insertion space C24. The extractor C30 may provide a third insertion space C34 inside. The third insertion space C34 may be open to one side. The third insertion space C34 may have a cylindrical shape. The third insertion space C34 may be defined by a lateral wall C31 and a lower wall C32 of the extractor C30. The outer circumferential surface of the extractor C30 may have a cylindrical shape.

The lower end of the stick S may be inserted into the third insertion space C34, and the upper end of the stick S may protrude outward from the aerosol generating device. The heater C50 may heat the first insertion space C14, the second insertion space C24, and the third insertion space C34. The heater C50 may heat the stick S inserted into the third insertion space C34.

Accordingly, the heater C50 may be readily replaced. The sizes of the insertion spaces C14, C24, and C34 and the size of the heater C50 disposed in the insertion spaces C14, C24, and C34 may be very small. Thus, it may be difficult to replace the heater C50. However, the user may readily replace the heater C50 by detaching the heater holder C20 from the aerosol generating device and placing a new heater holder C20 in the aerosol generating device.

In addition, a foreign substance generated from the stick S may not remain in the vicinity of the heater C50 and the heater holder C20 and may be extracted by the extractor C30. Accordingly, the aerosol generating device around the heater C50 may be readily cleaned, improving the convenience of maintenance. In addition, it may be possible to reduce factors that reduce the performance of the heater C50 and improve the durability of the heater C50, thereby increasing the replacement cycle of the heater C50. In addition, factors that alter the taste of the stick S may be reduced.

A lower end of the heater C50 may be secured to the mount C22. The heater C50 may be elongated toward an opening of the second insertion space C24. The heater C50 may be formed in a cylindrical shape with a pointy upper end. In another example, the heater C50 may have a shape extending in a circumferential direction and may be coupled to the lateral wall C21 of the heater holder C20. However, this is only an example. The shape of the heater C50 is not limited to the description and illustration above. The heater C50 may have any shape that is sufficiently coupled to the heater holder C20 to heat the stick S inserted into the third insertion space C34.

The heater holder C20 may be formed in the heater C50 by insert injection. The heater holder C20 may have high heat resistance and excellent rigidity. For example, the heater holder C20 may be formed of polyetheretherketone (PEEK). However, the material of the heater holder C20 is not limited thereto.

The lower wall C32 of the extractor C30 may be open, forming a through hole C35. The through hole C35 may be open vertically. When the extractor C30 is inserted into the second insertion space C24, the heater C50 may pass through the through hole C35 and protrude to the third insertion space C34. When the stick S is inserted into the third insertion space C34, the heater C50 may be inserted into the lower portion of the stick S.

An induction coil C15 may surround the first insertion space C14. The induction coil C15 may be wound around the circumference of the lateral wall C111 of the body pipe C11. The induction coil C15 may surround the heater C50. The induction coil C15 may heat the heater C50. In another example, the heater C50 may be directly and electrically connected to a power source through a terminal formed in the heater holder C20 and heated up by receiving power.

Accordingly, the stick S may be readily detached from the heater C50. The user may readily detach the stick S from the heater C50 by detaching the extractor C30 from the heater holder C20. The stick S inserted inside the extractor C30 may be detached from the heater C50 and may thus be more readily detached from the extractor C30. The stick S may also be detached from the extractor C30 when the extractor C30 is not detached from the heater holder C20.

In addition, a foreign substance generated from the stick S may not remain in the vicinity of the heater C50 and the heater holder C20 and may be extracted by the extractor C30. Accordingly, the aerosol generating device around the heater C50 may be readily cleaned, improving the convenience of maintenance. In addition, it may be possible to reduce factors that reduce the performance of the heater C50 and improve the durability of the heater C50, thereby increasing the replacement cycle of the heater C50. In addition, factors that alter the taste of the stick S may be reduced.

The heater holder C20 may be disposed between the body C10 and the extractor C30. The lateral wall C111 of the body pipe C11 may surround the lateral wall C21 of the heater holder C20. The lower wall C112 of the body pipe C11 may face the lower wall C22 of the heater holder C20. The lateral wall C21 of the heater holder C20 may surround the lateral wall C31 of the extractor C30. The lower wall C22 of the heater holder C20 may face the lower wall C32 of the extractor C30.

The lateral wall C31 of the extractor C30 may be spaced inward from the lateral wall C21 of the heater holder C20. The lower wall C32 of the extractor C30 may be spaced upward from the lower wall C22 of the heater holder C20. Air may flow between the extractor C30 and the heater holder C20, may pass through the through hole C35, and then may be provided to the stick S inserted into the third insertion space C34.

An upper wall C12 of the body C10 may extend outward in a horizontal direction from an upper end of the body pipe C11. The upper wall C12 of the body C10 may cover an upper end of the induction coil C15. An outer lateral wall C13 of the body C10 may extend downward from an outer side end of the upper wall C12 of the body C10. The outer lateral wall C13 of the body C10 may face the lateral wall C111 of the body pipe C11. The outer lateral wall C13 of the body C10 may be spaced outward from the body pipe C11. The induction coil C15 may be disposed between the body pipe C11 and the outer lateral wall C13 of the body C10.

An upper case C40 may be detachably coupled to the body C10. The upper case C40 may be coupled to an upper side of the body C10. The upper case C40 may cover around the first insertion space C14 and around an upper portion of the body C10. The upper case C40 may have an insertion hole C44. The stick S may be inserted into the insertion hole C44. The upper case C40 may include a cap C45 that opens and closes the insertion hole C44. The cap C45 may slide horizontally to open and close the insertion hole C44. The heater holder C20 may be disposed between the body C10 and the upper case C40.

The upper case C40 may include an upper case body C41. The upper case body C41 may be open vertically, forming the insertion hole C44. The insertion hole C44 may be positioned off-center, leaning to one side from the center of the upper case body C41. A lower surface of the upper case body C41 may have a shape corresponding to the upper wall C12 of the body C10. The lower surface of the upper case body C41 may extend horizontally in parallel to the upper wall C12 of the body C10. The cap C45 may be installed to slide on an upper side of the upper case body C41.

The upper case C40 may include an upper case wing C42. The upper case wing C42 may extend downward from both sides of the upper case body C41. A portion of a side portion of the upper case body C41 may be exposed between a pair of upper case wings C42. The upper case wing C42 may be referred to as an upper case grip C42.

The extractor C30 may be coupled to the upper case C40. An upper end of the extractor C30 may be coupled to the upper case C40, and a lower end of the extractor C30 may protrude to a lower side of the upper case C40. The extractor C30 may be coupled to a position corresponding to the insertion hole C44. The insertion hole C44 may be positioned on an upper side of the third insertion space C34. The insertion hole C44 may allow the third insertion space C34 to communicate with the outside of the aerosol generating device.

The upper end of the extractor C30 may be coupled to the upper case body C41. The extractor C30 may extend downward from the upper case body C41. The extractor C30 may be disposed between the pair of upper case wings C42.

The body C10 may include a body wing C16. The body wing C16 may extend upward from an edge of the upper wall C12 of the body C10. A pair of body wings C16 may be formed opposite to each other with respect to the upper portion of the body C10. The body wing C16 may be positioned in a way that is not aligned with the upper case wing C42.

When the upper case C40 is coupled to the body C10, the upper case C40 may form the upper exterior of the aerosol generating device. When the upper case C40 is coupled to the body C10, the body wing C16 may cover a side portion of the upper case body C41 exposed between the upper case wings C42. When the upper case C40 is coupled to the body C10, the upper case wing C42 may cover the outer lateral wall C13 of the body C10.

Accordingly, the user may more readily detach the extractor C30 from the body C10. The user may detach the extractor C30 from the body C10 without experiencing the inconvenience of gripping the extractor C30 inserted into the second insertion space C24 by gripping the exterior of the upper case C40 and detaching the extractor C30 from the body C10. For example, the user may readily detach the upper case C40 and the extractor C30 from the body C10 by pulling the pair of upper case wings C42 away from the body C10.

The extractor C30 may have a caught protrusion C37. The caught protrusion C37 may protrude outward from an upper outer circumferential surface of the extractor C30 in a horizontal direction. A plurality of caught protrusions C37 may be provided. The plurality of caught protrusions C26 may be spaced apart from each other in a circumferential direction. The caught protrusion C37 may be inserted into and engage with a groove formed in the upper case body C41 around the insertion hole C44 and may thus secure the extractor C30 to the upper case C40. The caught protrusion C37 may engage with the upper case body C41 in a circumferential direction.

Accordingly, in the process of inserting and removing the stick S, the extractor C30 may be prevented from rotating around the upper case C40 in a circumferential direction.

The heater holder C20 may include an extension C23. The extension C23 may be formed at an upper end of the heater holder C20. The extension C23 may extend outward from an upper end of the pipe C20' in a horizontal direction. The extension C23 may have a plate shape. The extension C23 may be formed longer on one side with respect to the pipe C20'. The extension C23 may be referred to as a heater holder extension C23.

The extension C23 may have a shape corresponding to the upper wall C12 of the body C10. The extension C23 may be formed horizontally on the upper wall C12 of the body C10. When the pipe C20' is inserted into the first insertion space C14, the extension C23 may be supported by or seated on the upper wall C12 of the body C10. The upper wall C12 of the body C10 may support the extension, and the extension C23 may support the pipe C20'. The pipe C20' may be suspended from the extension C23 and spaced upward from the bottom C112 of the body pipe C11, thereby forming an air gap. An outer circumferential surface of the pipe C20' may be spaced inward from the lateral wall C111 of the body pipe C11, thereby forming an air gap.

The extension C23 may have a shape corresponding to the lower surface of the upper case body C41. The extension C23 may be formed horizontally on the lower surface of the upper case body C41. When the upper case C40 is coupled to the body C10 and the extractor C30 is inserted into the pipe C20', the extension C23 may be in contact with the lower surface of the upper case body C41.

A first coupling member C27 may be secured to the heater holder C20. For example, the first coupling member C27 may be secured to the extension C23. The first coupling member C27 may be secured to an inner portion or outer surface of the extension C23. The heater holder C20 may be insert-injected into the first coupling member C27 and the heater C50.

The extension C23 may include a first extension C231 and a second extension C232. The first extension C231 may extend from the pipe C20' to one side, and the second extension C232 may extend from the pipe C20' to the other side. The first extension C231 may extend longer than the second extension C232. The perimeter of the first extension C231 may be greater than the perimeter of the second extension C232. The first extension C231 may be formed to be horizontally wider than the second extension C232. With respect to the pipe C20' extending downward from the extension C23 in a plate shape, one side may be defined as the first extension C231 and the other side may be defined as the second extension C232. The pipe C20' may extend downward from a portion positioned off-center, leaning to one side from the center of the extension C23.

The first coupling member C27 may be secured to the first extension C231 of a portion of the extension C23, elongated to one side with respect to the pipe C20'. The first coupling member C27 may have a plate shape. The first coupling member C27 may be disposed widely in the first extension C23 in a horizontal direction. The position at which the first coupling member C27 is disposed is not limited thereto. For example, the first coupling member C27 may be secured to the pipe C20'.

The first coupling member C27 may be formed of a magnetic material. The first coupling member C27 may be a ferromagnetic material. For example, the first coupling member C27 may be formed of stainless steel. However, the material of the first coupling member C27 is not limited thereto.

The second coupling member C47 may be secured to the upper case C40. The second coupling member C47 may be secured to the inside of the upper case body C41. The second coupling member C47 may be adjacent to the lower surface of the upper case body C41. However, the position at which the second coupling member C47 is disposed is not limited thereto. For example, the second coupling member C47 may be secured to the upper case wing C42. In another example, the second coupling member C47 may be secured to the extractor C30. The second coupling member C47 may be disposed at a position corresponding to the first coupling member C27.

The second coupling member C47 and the first coupling member C27 may exert an attractive force on each other. For example, the first coupling member C27 may be a ferromagnetic material, and the second coupling member C47 may be a magnet. However, the materials of the first coupling member C27 and the second coupling member C47 are not limited thereto.

A third coupling member C17 may be secured to the inside of the body C10. The third coupling member C17 may be adjacent to the upper wall C12 of the body C10. The third coupling member C17 may be disposed at a position corresponding to the first coupling member C27. However, the position at which the third coupling member C17 is disposed is not limited thereto. For example, the third coupling member C17 may be adjacent to the lateral wall C111 of the body pipe C11. The third coupling member C17 and the first coupling member C27 may exert an attractive force on each other. For example, the first coupling member C27 may be a ferromagnetic material, and the third coupling member C17 may be a magnet. However, the materials of the first coupling member C27 and the third coupling member C17 are not limited thereto.

An outer circumferential surface of the lateral wall C21 of the pipe C20' may form a plurality of angles in a circumferential direction. A horizontal cross-section of the outer circumferential surface of the lateral wall C21 of the pipe C20' may be polygonal. The outer circumferential surface of the lateral wall C21 of the pipe C20' may be formed of a plurality of surfaces, each of which is elongated vertically and arranged at an angle along the circumferential direction. The outer circumferential surface of the pipe C20' may be spaced inward from the lateral wall C111 of the body pipe C11, thereby forming an air gap. The heater C50 may be surrounded by the extractor C30 and the pipe C20'. The extractor C30 and the pipe C20' may be spaced from each other, thereby forming an air gap.

Accordingly, it may be possible to reduce the amount of heat, which is generated by the heater C50, to be transferred through the pipe C20' to the body pipe C11, thereby reducing the phenomenon of the aerosol generating device overheating.

The upper case C40 may be detached from the body C10. The heater holder C20 may be detachably coupled to the upper case C40. When the upper case C40 is detached from the body C10, the heater holder C20 may be detached from the body C10 together with the upper case C40 in a state of being coupled to the upper case C40. When the upper case C40 to which the heater holder C20 is coupled is detached from the body C10, the heater holder C20 may be detached from the upper case C40.

In another example, the heater holder C20 may be detachably coupled to the extractor C30. When the extractor C30 is detached from the body C10, the heater holder C20, in a coupled stated with the extractor C30, may be detached from the body C10 together with the extractor C30. While the extractor C30 to which the heater holder C20 is coupled is detached from the body C10, the heater holder C20 may be detached from the extractor C30.

The first coupling member C27 and the second coupling member C47 may exert an attractive force on each other. The first coupling member C27 and the second coupling member C47 may detachably couple the heater holder C20 to the upper case C40 and/or the extractor C30. For example, the first coupling member C27 and the second coupling member C47 may be magnets, exerting an attractive force on each other. In another example, one of the first coupling member C27 and the second coupling member C47 may be a ferromagnetic material, and the other may be a magnet. However, embodiments are not limited thereto. The first coupling member C27 and the second coupling member C47 may be any components exerting an attractive force on each other through electrical or magnetic force.

The extension C23 may form a horizontal surface corresponding to the lower surface of the upper case body C41. The first extension C231 may form a horizontal surface corresponding to the lower surface of the upper case body C41. An upper surface of the extension C23 may be horizontally supported by the upper case body C41. The area of the first extension C231 that is supported by the upper case body C41 may be greater than the area of the second extension C232 that is supported by the upper case body C41.

The first coupling member C27 may have a plate shape. The first coupling member C47 may be horizontally secured to the first extension C231. The second coupling member C47 may be adjacent to the lower surface of the upper case body C41. The second coupling member C47 may be formed at a position corresponding to the first coupling member C27. Due to the attractive force between the first coupling member C27 and the second coupling member C47, the first extension C231 may be in contact with the lower surface of the upper case body C41.

In another example, the heater holder C20 may be detachably coupled to the upper case C40 using a screw coupling scheme. In this case, the heater holder C20 may be detached from or coupled to the upper case C40 using the screw coupling scheme by rotating in a circumferential direction. Alternatively, a fastening screw may be used to detachably couple the heater holder C20 to the upper case C40. In another example, the heater holder C20 may be detachably coupled to the upper case C40 by a snap-fit coupling scheme. In this case, one of the heater holder C20 and the upper case C40 may have a coupling hook, and the other may include a groove to which the hook is coupled. However, this is only an example, and the scheme by which the heater holder C20 is detachably coupled to the upper case C40 is not limited thereto. The heater holder C20 may be detachably coupled to the upper case C40 using various well-known schemes.

The heater holder C20 coupled to the upper case C40 may protrude downward from the upper case C40. The heater holder C20 may be disposed between the pair of upper case wings C42. The pipe C20' may protrude downward from the upper case body C41 more than the upper case wing C42. Accordingly, the heater holder C20 may be readily gripped.

Accordingly, the heater holder C20 may be readily detached from the upper case C40 and stably coupled to the upper case C40. In addition, the heater C50 may be conveniently replaced.

In addition, the stick S may be readily detached from the heater C50. The user may readily detach the stick S from the heater C50 by detaching the extractor C30 from the heater holder C20. The stick S inserted inside the extractor C30 may be detached from the heater C50 and may thus be more readily detached from the extractor C30.

The heater holder C20 may be detachably coupled to the body C10. When the heater holder C20 is coupled to the body C10, the upper case C40 and/or the extractor C30 may be detached from the body C10 and the heater holder C20. When the upper case C40 and/or the extractor C30 are detached from the body C10 and the heater holder C20, the heater holder C20 may be detached from the body C10.

The first coupling member C27 and the third coupling member C17 may exert an attractive force on each other. The first coupling member C27 and the third coupling member C17 may detachably couple the heater holder C20 to the body C10. For example, the first coupling member C27 and the third coupling member C17 may be magnets, exerting an attractive force on each other. In another example, one of the first coupling member C27 and the third coupling member C17 may be a ferromagnetic material, and the other may be a magnet. However, embodiments are not limited thereto. The first coupling member C27 and the third coupling member C17 may be any components exerting an attractive force on each other through electrical or magnetic force.

The extension C23 may cover the upper wall C12 of the body C10, and the pipe C20' may be inserted into the first insertion space C14. The extension C23 may form a horizontal surface corresponding to the upper wall C12 of the body C10. The first extension C231 may correspond to the upper wall C12 on one side of the body C10, and the second extension C232 may correspond to the upper wall C12 on the other side of the body C10. A lower surface of the extension C23 may be horizontally supported by the upper wall C12 of the body C10. The area of the first extension C231 that is supported by the body C10 may be greater than the area of the second extension C232 that is supported by the body C10.

The first coupling member C27 may have a plate shape. The first coupling member C47 may be horizontally secured to the first extension C231. The third coupling member C17 may be adjacent to the upper wall C12 of the body C10. The third coupling member C17 may be formed at a position corresponding to the first coupling member C27. The first coupling member C27 may be disposed in the first extension C231, and the third coupling member C17 may be adjacent to the upper wall C12 on one side of the body C10 covered by the first extension C231. Due to the attractive force between the first coupling member C27 and the third coupling member C47, the first extension C231 may be in contact with the upper wall C12 of the body C10.

In another example, the heater holder C20 may be detachably coupled to the body C10 by the screw coupling scheme. In this case, the heater holder C20 may be detached from or coupled to the body C10 by rotating in a circumferential direction using the screw coupling scheme. Alternatively, the fastening screw may be used to detachably couple the heater holder C20 to the body C10. In another example, the heater holder C20 may be detachably coupled to the body C10 by the snap-fit coupling scheme. In this case, one of the heater holder C20 and the body C10 may include the coupling hook, and the other may include the groove to which the hook is coupled. However, this is only an example, and the scheme by which the heater holder C20 is detachably coupled to the body C10 is not limited thereto. The heater holder C20 may be detachably coupled to the body C10 using various well-known schemes.

The extension C23 coupled to the body C10 may be exposed upward from the body C10. The extension C23 may be disposed between the pair of body wings C16. The extension C23 may be disposed between the pair of body wings C16, either adjacent to the outer lateral wall C13 of the body 10 or vertically parallel to the outer later wall C13. Accordingly, the heater holder C20 may be readily gripped.

Accordingly, the heater holder C20 may be readily detached from the body C10 and stably coupled to the body C10. In addition, the heater C50 may be conveniently replaced.

In addition, the stick S may be readily detached from the heater C50. The user may readily detach the stick S from the heater C50 by detaching the extractor C30 from the heater holder C20. The stick S inserted inside the extractor C30 may be detached from the heater C50 and may thus be more readily detached from the extractor C30.

Referring to FIG. 11, the first coupling member C27 may be disposed between the second coupling member C47 and the third coupling member C17. The first coupling member C27 and the second coupling member C47 may exert an attractive force on each other. The first coupling member C27 and the third coupling member C17 may exert an attractive force on each other. For example, each of the second coupling member C47 and the third coupling member C17 may be a magnet, and the first coupling member C27 may be a magnet between the first coupling member C47 and the third coupling member C17, exerting an attractive force on each of the second coupling member C47 and the third coupling member C17. In another example, the first coupling member C27 may be a ferromagnetic material, and each of the second coupling member C47 and the third coupling member C17 may be a magnet. However, embodiments are not limited thereto. The first coupling member C27 may be any configurations exerting an attractive force on each of the second coupling member C47 and the third coupling member C17 through electrical or magnetic force.

Accordingly, the user may optionally couple the heater holder C20 to either the body C10 or the extractor C30 when the upper case C40 and/or the extractor C30 is detached from the body C10. In addition, the upper case C40 and/or the extractor C30 may be readily and stably coupled to the body C10.

The attractive force between the first coupling member C27 and the second coupling member C47 may be different from the attractive force between the first coupling member C27 and the third coupling member C17. For example, the attractive force between the first coupling member C27 and the second coupling member C47 may be greater than the attractive force between the first coupling member C27 and the third coupling member C17.

Accordingly, when the upper case C40 and/or the extractor C30 is detached from the body C10, the heater holder C20 may also be detached from the body C10. In addition, when the upper case C40 and/or the extractor C30 is coupled to the body C10 while the heater holder C20 is coupled to the upper case C40 and/or the extractor C30, the attractive force between the first coupling member C27 and the third coupling member C17 may facilitate easier coupling of the upper case C40 to the body C10 and maintain a more stable coupling state.

In another example, the attractive force between the first coupling member C27 and the second coupling member C47 may be greater than the attractive force between the first coupling member C27 and the third coupling member C17. Accordingly, when the upper case C40 and/or the extractor C30 is detached from the body, the heater holder C20 may remain coupled to the body C10, and the stick S may be more readily detached from the extractor C30 after being removed from the heater C50.

Referring to FIG. 12, a guide portion C25 may be formed on an upper inner circumferential surface of the pipe C20'. The guide portion C25 may be disposed between the pipe C20' and the extension C23. The guide portion C25 may be in contact with the opening of the second insertion space C24. The guide portion C25 may extend downward at a slant. The guide portion C25 may extend in a circumferential direction to surround the opening of the second insertion space C24.

Accordingly, the guide portion C25 may be in contact with a lower portion of the extractor C30 and guide the extractor C30 to be readily inserted into the second insertion space C24.

The lower end of the heater C50 may be inserted and secured to the mount C22. The heater C50 may include a heater rod C51. The heater rod C51 may form the exterior of the heater C50. The heater rod C51 may be elongated vertically. The heater rod C51 may have a cylindrical shape. The heater rod C51 may have a downward-opening hollow. The hollow may be elongated vertically. The hollow inside the heater rod C51 may be formed in a cylindrical shape. An upper end of the heater rod C51 may be formed into an upward-pointing shape. The heater rod C51 may have high thermal expansibility, excellent thermal insulation, and low thermal conductivity. The heater rod C51 may have high rigidity. For example, the heater rod C51 may be formed of zirconia. However, the material of the heater rod C51 is not limited thereto.

The heater C50 may include a heating portion C52. The heating portion C52 may be inserted into the hollow inside the heater rod C51. The heating portion C52 may be elongated vertically. The heating portion C52 may be formed in a cylindrical shape. The heating portion C52 may be formed of resistant metal. Heat generated from the heating portion C52 may be transferred to the outside of the heater C50 through the heater rod C51. The heating portion C52 may be disposed at a height corresponding to the third insertion space C34 (see FIG. 6). A lower end of the heating portion C52 may be adjacent to a lower end of the through hole C35.

The heater C50 may include a support body C53. The support body C53 may be inserted into the hollow of the heater rod C51. The support body C53 may be disposed at a lower side of the heating portion C52. The support body C53 may be secured to the heater rod C51 in the hollow. The support body C53 may support a lower portion of the heating portion C52. A lower end of the support body C53 may be supported by a bottom C22a of the mount C22. A hole C22c formed at the center of the mount C22 may be formed by the process of insert-injecting the heater holder C20. The width of the hole C22c may be less than the width of the support body C53, preventing the disengagement of the support body C53. The hole C22c may be absent. The support body C53 may have high heat resistance. The support body C53 may not undergo thermal deformation due to the heat generated from the heating portion C52. The support body C53 may be formed of polyamide. However, the material of the support body C53 is not limited thereto.

The heater C50 may include a flange C55. The flange C55 may be formed at a lower end of the heater rod C51. The flange C55 may extend outward from an outer circumferential surface of the lower end of the heater rod C51 in a horizontal direction. The flange C55 may extend in a circumferential direction of the heater rod C51. The lower end of the heater rod C51 and the flange C55 may be inserted into the mount C22. The mount C22 may be integrally coupled to the flange C55 as the heater holder C20 is insert-injected into the heater C50.

A horizontal cross-section of an outer circumferential surface of the flange C55 may have a non-circular shape. An inner circumferential surface of the mount C22 may have a shape corresponding to the outer circumferential surface of the flange C55. The inner circumferential surface of the mount C22 and the outer circumferential surface of the flange C55 may engage with each other in a circumferential direction. Accordingly, in the process of detaching or inserting the stick S from or into the heater C50, the heater C50 may be prevented from rotating around the heater holder C20 in the circumferential direction.

The flange C55 may include a first caught portion C55a. The first caught portion C55a may protrude outward from the circumference of the flange C55. The first caught portion C55a may be formed on a lower portion of the flange C55. The first caught portion C55a may extend along the circumference of the flange C55.

The mount C22 may include a second caught portion C22b. The second caught portion C22b may protrude inward toward a groove of the mount C22. The second caught portion C22b may have a shape corresponding to the first caught portion C55a. The first caught portion C55a may be positioned on a lower side of the second caught portion C22b. The first caught portion C55a and the second caught portion C22b may overlap vertically. The second caught portion C22a may support the first caught portion C55a and prevent the flange C55 from being separated upward from the mount C22.

The extension C23 may extend longer to one side with respect to the pipe C20' or the second insertion space C24. Based on the horizontal direction on one side, a length L1 of the first extension C231 may be greater than a length L2 of the second extension C232. The length L1 of the first extension C231 may be greater than a diameter L0 of the second insertion space C24. Alternatively, the length L1 of the first extension C231 may be closer to the diameter L0 of the second insertion space C24 than the length L2 of the second extension C232. The first coupling member C47 may have a plate shape. The first coupling member C47 may be horizontally secured to the first extension C23.

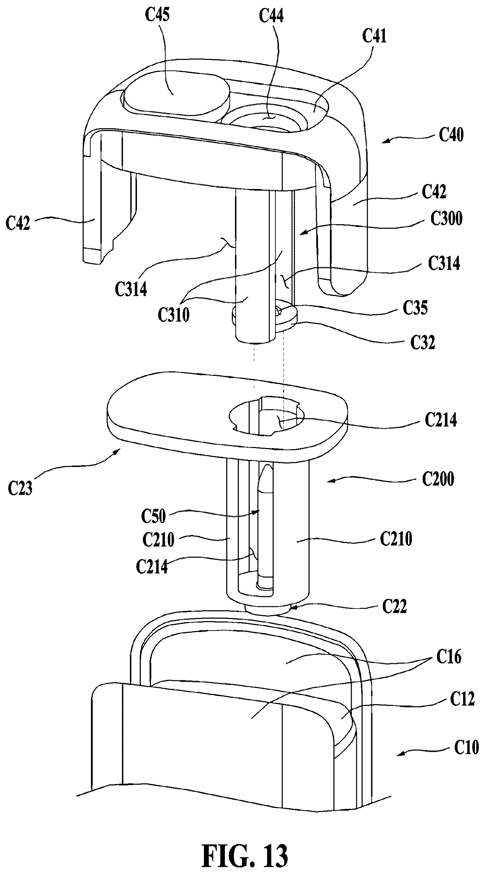

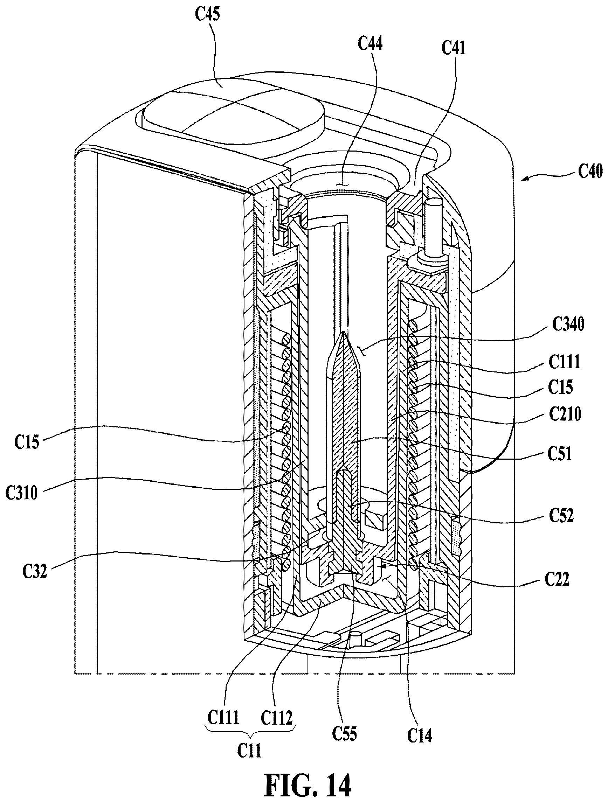

FIG. 13 is an exploded perspective view of an upper case, a body, and a heater holder of an aerosol generating device according to another embodiment of the present disclosure, and FIG. 14 is an assembled cross-sectional view of the upper case, the body, and the heater holder of the aerosol generating device according to another embodiment of the present disclosure.

Referring to FIG. 13, a lateral wall C210 of a heater holder C200 and a lateral wall C310 of an extractor C300 may together define a fourth insertion space C340 (see FIG. 13) that open upward. Each of the lateral wall C210 of the heater holder C200 and the lateral wall C310 of the extractor C300 may cover at least one side of the fourth insertion space C340. The lateral wall C210 of the heater holder C200 and the lateral wall C310 of the extractor C300 may together form a side circumference of the fourth insertion space C340.

The lateral wall C210 of the heater holder C200 may be elongated vertically. The lateral wall C310 of the extractor C300 may be elongated vertically. Both the lateral wall C210 of the heater holder C200 and the lateral wall C310 of the extractor C300 may be equidistant from the center of the fourth insertion space C340 in a radial direction. Each of the lateral wall C210 of the heater holder C200 and the lateral wall C310 of the extractor C300 may be positioned along the same circumferential extension line of the fourth insertion space C340. Each of the lateral wall C210 of the heater holder C200 and the lateral wall C310 of the extractor C300 may extend in a circumferential direction along the circumference of the fourth insertion space C340 in a curved manner.

For example, a plurality of lateral walls C210 of the heater holder C200 may be arranged along the circumference of the lower wall C22 of the heater holder C200. In each gap between the plurality of lateral walls C210 of the heater holder C200, a first slit C214 that open upward and elongated vertically may be formed. The plurality of lateral walls C210 and a plurality of first slits C214 of the heater holder C200 may be arranged alternately in a circumferential direction along the circumference of the fourth insertion space C340.

For example, two lateral walls C210 of the heater holder C200 may be formed opposite to each other with respect to the fourth insertion space C340. Between the two lateral walls C210 of the heater holder C200, two first slits C214 may be formed opposite to each other with respect to the fourth insertion space C340. However, the number of lateral walls C210 and the first slits C214 of the heater holder C200 is not limited thereto and may be one or three or more.

For example, a plurality of lateral walls C310 of the extractor C300 may be arranged along the circumference of the lower wall C32 of the extractor C300. In each gap between the plurality of lateral walls C310 of the extractor C300, a second slit C314 that is elongated vertically may be formed. The plurality of lateral walls C310 and a plurality of second slits C314 of the extractor C300 may be alternately arranged in a circumferential direction along the circumference of the fourth insertion space C340.

For example, two lateral walls C310 of the extractor C300 may be formed opposite to each other with respect to the fourth insertion space C340. Between two lateral walls C310 of the extractor C300, two second slits C314 may be formed opposite to each other with respect to the fourth insertion space C340. However, the number of lateral walls C310 and the second slits C314 of the extractor C300 is not limited thereto and may be one or three or more.

The extractor C300 may be inserted into the heater holder C200. When the extractor C300 is inserted into the heater holder C200, the lateral wall C210 of the heater holder C200 may be disposed in the second slit C314, and the lateral wall C310 of the extractor C300 may be disposed in the first slit C214.

Accordingly, the lateral wall C210 of the heater holder C200 and the lateral wall C310 of the extractor C300 may form the fourth insertion space C340. Also, the thickness of the wall between the induction coil C15 and the heater C50 may be reduced, improving the heating efficiency of the heater C50.

The lower wall C32 of the extractor C300 may cover a lower portion of the fourth insertion space C340. The lower wall C22 of the heater holder C200 may be disposed on a lower side of the lower wall C32 of the extractor C300 and cover the lower side of the lower wall C32 of the extractor C300. The heater C50, which protrudes by being secured to the lower wall C22 of the heater holder C200, may pass through the through hole C35 formed in the lower wall C32 of the extractor C300 and be exposed in the fourth insertion space C340.

The lower wall C22 of the heater holder C200 may be spaced upward from the lower wall C112 of the body pipe C11. An air gap may be formed between the lower wall C22 of the heater holder C200 and the lower wall C112 of the body pipe C11. The lower wall C32 of the extractor C300 may be spaced upward from the lower wall C22 of the heater holder C200. An air gap may be formed between the lower wall C32 of the extractor C300 and the lower wall C22 of the heater holder C200. Some of the heat generated from the heater C50 may be transferred from the lower wall C22 to the lateral wall C210 of the heater holder C200, transferred to the lower wall C112 and the lateral wall C111 of the body pipe C11, and spread. In addition, some of the heat generated from the heater C50 may spread through the air gap formed between the heater holder C200 and the extractor C300 around the heater C50.

Accordingly, it may be possible to reduce the amount of heat, which is generated by the heater C50, to be conducted to internal components of the aerosol generating device, thereby preventing a malfunction of the aerosol generating device. In addition, it may be possible to reduce the amount of heat, which is generated by the heater C50, to be conducted to the outside of the aerosol generating device, thereby reducing the transfer of heat to the user.

The lateral wall C210 of the heater holder C200 and the lateral wall C310 of the extractor C300 may engage with each other in a radial direction. The lateral wall C210 of the heater holder C200 and the lateral wall C310 of the extractor C300 may support each other in both the inner and outer directions of the radius.

Accordingly, the heater holder C200 and the extractor C300 may stay securely in place without any radial misalignment or shaking.

For example, each of the lateral walls C210 of the heater holder C200 may have a first recessed portion that is recessed from both end portions in a circumferential direction. Both end portions of each of the lateral walls C210 of the heater holder C200 may protrude more than the first recessed portion in the circumferential direction. The first recessed portion may be formed in an inner circumferential surface of the lateral wall C210 of the heater holder C200 and may also be formed in an outer circumferential surface thereof. An end portion of the lateral wall C210 of the heater holder C200 may be referred to as a first protrusion.

Each of the lateral walls C310 of the extractor C300 may have a second recessed portion that is recessed from both end portions in a circumferential direction. Both end portions of each of the lateral walls C310 of the extractor C300 may protrude more than the second recessed portion in the circumferential direction. The second recessed portion may be formed in an outer circumferential surface and may also be formed in an inner circumferential surface. An end portion of the lateral wall C310 of the extractor C300 may be referred to as a second protrusion.

Based on a radial direction, the first recessed portion and the second protrusion may be positioned at corresponding positions. The second protrusion may be disposed in the first recessed portion. Based on the radial direction, the first protrusion and the second recessed portion may be positioned at corresponding positions. The first protrusion may be disposed in the second recessed portion. The second protrusion may overlap the first protrusion in the radial direction.

Accordingly, the first protrusion and the second protrusion may support each other in the radial direction, and the lateral wall C210 of the heater holder C200 and the lateral wall C310 of the extractor C300 may be stably positioned.

Such arrangement is only an example, and the arrangement in which the lateral wall C210 of the heater holder C200 and the lateral wall C310 of the extractor C300 engage with each other in the radial direction is not limited thereto.

As used herein, the terms "substantially", "approximately", "generally", and "about" in reference to a given parameter, property, or condition may include a degree that one of ordinary skill in the art would understand that the given parameter, property, or condition is met with a small degree of variance, such as within acceptable manufacturing tolerances. For example, a parameter that is substantially met may be at least about 90% met, at least about 95% met, or at least about 99% met.

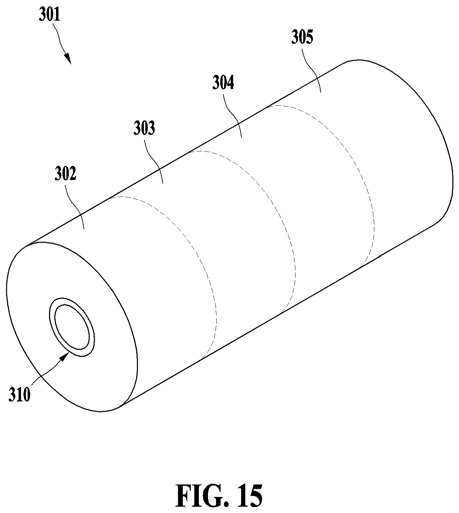

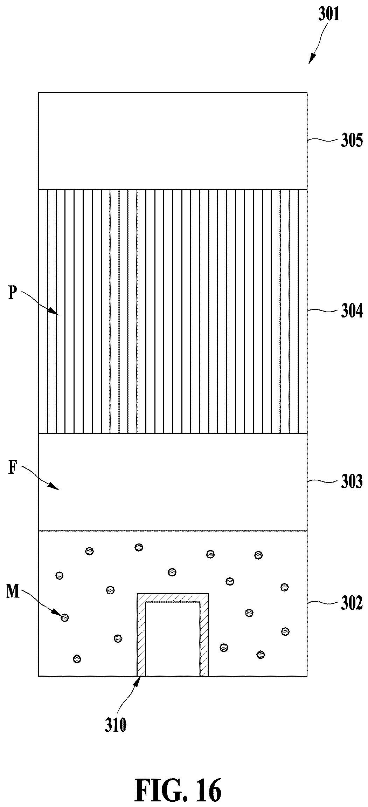

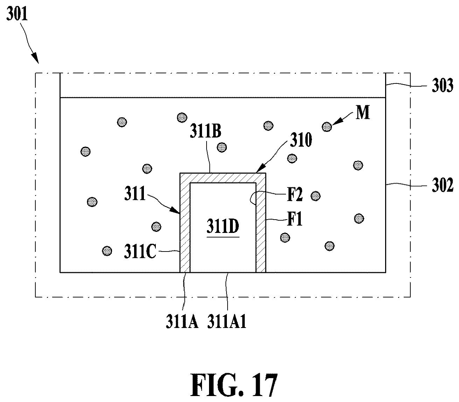

FIG. 15 is a perspective view of an aerosol generating article according to an embodiment. FIG. 16 is a diagram illustrating a cross-section of the aerosol generating article according to an embodiment. FIG. 17 is a diagram illustrating a cross-section of a portion of the aerosol generating article according to an embodiment.

Referring to FIGS. 15 to 17, an aerosol generating article 301 may include a first segment 302.

The term "upstream" or "upstream direction" used herein refers to a direction away from the mouth of a user, and the term "downstream" or "downstream direction" refers to a direction toward the mouth of a user. The terms "upstream" and "downstream" may be used to describe relative positions of components of an aerosol generating article.

The first segment may include a medium M. The medium M may have various shapes. For example, the medium M may include at least one of sheets or strands or a combination thereof. The medium M may include tobacco leaves cut from a sheet. The medium M may include an aerosol generating material (e.g., tobacco). The medium M may include at least one or a combination of glycerin, propylene glycol, ethylene glycol, dipropylene glycol, diethylene glycol, triethylene glycol, tetraethylene glycol, or oleyl alcohol. The medium M may include a flavoring agent, a humectant, and/or an organic acid. The medium M may contain a flavor. The medium M may include an aerosol generating material (e.g., tobacco), a humectant (e.g., glycerin), a flavoring agent, or a combination thereof.

The aerosol generating article 301 may include a second segment 303. The second segment 303 may be disposed downstream of the first segment 302. The second segment 303 may be directly connected to the first segment 302. In an embodiment not shown, the aerosol generating article 301 may include an additional segment between the first segment 302 and the second segment 303.

The second segment 303 may include a filter F. For example, the filter F may include a cellulose acetate filter. In an embodiment not shown, the second segment 303 may have a structure in a hollow tube shape. The structure may reduce or prevent the movement of the medium M and/or a heat source 310. The structure may be configured to cool the airflow passing through the second segment 303.

The aerosol generating article 301 may include a third segment 304. The third segment 304 may be disposed downstream of the second segment 303. The third segment 304 may be directly connected to the second segment 303. In an embodiment not shown, the aerosol generating article 301 may include an additional segment between the second segment 303 and the third segment 304.

The third segment 304 may be configured to cool the airflow passing through the third segment 304. The third segment 304 may be configured to cool the generated aerosol. For example, the third segment 304 may include a paper tube P. The paper tube may whirl the airflow and absorb thermal energy.

The aerosol generating article 301 may include a fourth segment 305. The fourth segment 305 may include a filter containing acetate tow. The fourth segment 305 may be disposed downstream of the third segment 304. The fourth segment 305 may be directly connected to the third segment 304. In an embodiment not shown, the aerosol generating article 301 may include an additional segment between the third segment 304 and the fourth segment 305.

The first segment 302 may include the heat source 310. The heat source 310 may be configured to generate heat by surface plasmon resonance (SPR). "SPR" refers to collective oscillations of electrons propagating along an interface of metal particles with a medium. For example, the collective oscillation of electrons of metal particles may be caused by light propagating from the outside of the heat source 310. The excitation of electrons of metal particles may generate thermal energy, and the generated thermal energy may be transferred within an environment to which the heat source 310 is applied.

The heat generated from the heat source 310 may be transferred to the medium M and may cause the aerosol generating material to change the phase thereof into an aerosol.

The heat source 310 may include a substrate 311. The substrate 311 may include a first end portion 311A disposed upstream of the first segment 302. The first end portion 311A may be at least partially open. For example, the first end portion 311A may include an opening 311A1. The substrate 311 may include a second end portion 311B disposed downstream of the first segment 302. The second end portion 311B may be positioned opposite to the first end portion 311A. The second end portion 311B may be a substantially closed surface or may have a substantially closed surface. The second end portion 311B may substantially prevent light from passing through the second end portion 311B. The substrate 311 may include a lateral portion 311C extending between the first end portion 311A and the second end portion 311B. The first end portion 311A, the second end portion 311B, and the lateral portion 311C may substantially define the cylindrical shape of the substrate 311. The cylindrical shape of the substrate 311 may enable the heat generated from the heat source 310 to be evenly transferred to the medium M.

The substrate 311 may include an outer surface F1. At least a portion (e.g., an outer side surface) of the outer surface F1 may at least partially face the medium M. The substrate 311 may include an inner surface F2. The inner surface F2 may be positioned opposite to the outer surface F1. The inner surface F2 may define a cavity 311D. The cavity 311D may have a substantially cylindrical space.

The substrate 311 may be formed of a variety of materials. For example, the substrate 311 may be formed of a metal material such as aluminum, glass, silicon (Si), silicon oxide (SiO2), sapphire, polystyrene, polymethyl methacrylate, and/or any other suitable material. The substrate 311 may be formed of any one or combination of glass, silicon (Si), silicon oxide (SiO2), and sapphire. The substrate 311 may include a material having a relatively low heat transfer coefficient. This may allow heat to be transferred only to a partial area on the substrate 311.

The substrate 311 may exhibit electrical conductivity. The substrate 311 may exhibit electrical insulating properties.

The substrate 311 may be formed of a material having any thermal conductivity suitable for use in an environment in which the heat source 310 is disposed. For example, the substrate 311 may have a thermal conductivity of about 0.6 Watts per meter-Kelvin (W/mK) or less, about 1 W/mK to about 2 W/mK, about 2 W/mK to about 5 W/mK, about 5 W/mK to about 10 W/mK, about 10 W/mK to about 100 W/mK, or about 100 W/mK to about 200 W/mK, at a pressure of 1 bar and a temperature of 25°C. The substrate 311 may have a thermal conductivity of about 0.6 W/mK or less, about 1.3 W/mK, about 148 W/mK, or about 46.06 W/mK, at a pressure of 1 bar and a temperature of 25°C.

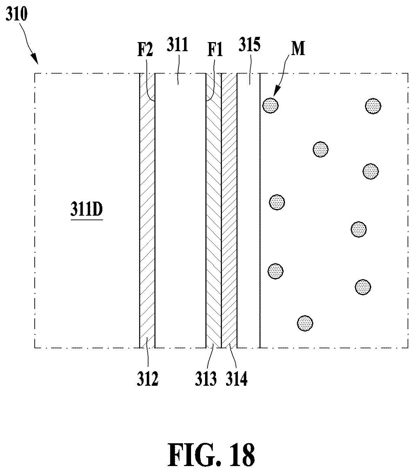

FIG. 18 is a diagram illustrating a cross-section of a portion of a heat source according to an embodiment.

Referring to FIG. 18, the heat source 310 may include a metal layer 312 disposed on the inner surface F2. Light entering the cavity 311D may be transferred to the metal layer 312. The metal layer 312 may include a plurality of metal particles. Electrons that form each of the plurality of metal particles may vibrate collectively upon receiving light. The excitation of electrons may generate thermal energy. The plurality of metal particles may be nanoscale. For example, the plurality of metal particles may have an average maximum diameter of about 1 micrometer (µm) or less. The plurality of metal particles may have an average maximum diameter of about 700 nm or less, about 600 nm or less, about 500 nm or less, about 400 nm or less, about 300 nm or less, about 200 nm or less, about 150 nm or less, or about 100 nm or less.

The plurality of metal particles may be formed of any material suitable for generating heat. For example, the plurality of metal particles may include at least one of gold, silver, copper, palladium, platinum, aluminum, titanium, nickel, chromium, iron, cobalt, manganese, rhodium, and ruthenium, or a combination thereof.

The plurality of metal particles may be formed of any material suitable for generating heat by interacting with light of a predetermined wavelength band (e.g., a visible light wavelength band, that is, about 380 nm to about 780 nm). For example, the plurality of metal particles may include at least one of gold, silver, copper, palladium, and platinum, or a combination thereof.

The plurality of metal particles may be formed of a metal material having an average maximum absorbance. Here, the average maximum absorbance may be defined as an absorbance substantially having a peak in a predetermined wavelength band. A predetermined wavelength band corresponding to the absorbance may be understood as a wavelength band in which the plurality of metal particles resonate. For example, the plurality of metal particles may be formed of a metal material having an average maximum absorbance in a wavelength band between about 310 nm and about 450 nm, between about 480 nm and about 500 nm, between about 490 nm and about 510 nm, between about 500 nm and about 520 nm, between about 550 nm and about 570 nm, between about 600 nm and about 620 nm, between about 620 nm and about 640 nm, between about 630 nm and about 650 nm, between about 640 nm and about 660 nm, between about 680 nm and about 700 nm, or between about 700 nm and about 750 nm. The average maximum absorbance of the plurality of metal particles may vary depending on the type of the substrate 311, the size of the metal layer 312, and/or the shape of the metal layer 312, in addition to the metal material.

The metal layer 312 may be about 10 nm or less in thickness. When the metal layer 312 has a thickness exceeding 10 nm, the exothermic reaction of the plurality of metal particles forming the metal layer 312 may decrease, and consequently, the thermal efficiency of the heat source 310 may decrease.

The heat source 310 may include an absorbing layer 313 configured to absorb light. The absorbing layer 313 may be configured to absorb light penetrating through the substrate 311 in a direction from the inner surface F2 of the substrate 311 toward the outer surface F1. The absorbing layer 313 may increase the light use efficiency of the heat source 310. The absorbing layer 313 may be disposed on or over the outer surface F1. The absorbing layer 313 may be disposed substantially throughout the entire area of the outer surface F1. The absorbing layer 313 may be disposed in a local area (e.g., an outer side surface) of the outer surface F1. The absorbing layer 313 may be attached to the outer surface F1. The absorbing layer 313 may include a material of a color (e.g., black) with relatively high saturation. For example, the absorbing layer 313 may have a heat resistance of about 800 degrees Celsius.

The heat source 310 may include a reflective layer 314. The reflective layer 314 may be configured to reflect, toward the inner surface F2, light penetrating through the substrate 311 in a direction from the inner surface F2 of the substrate 311 toward the outer surface F1. The reflective layer 314 may be disposed on the absorbing layer 313. In an embodiment not shown, the reflective layer 314 may be disposed over the absorbing layer 313 with a gap G therebetween. The reflective layer 314 may be disposed substantially throughout the entire area of the absorbing layer 313. The reflective layer 314 may be disposed in a local area of the absorbing layer 313. The reflective layer 314 may include any material suitable for reflecting light. For example, the reflective layer 314 may include at least one of gold, silver, copper, or any other metal material suitable for reflection, or a combination thereof. The reflective layer 314 may have any thickness suitable for reflecting light. For example, the thickness of the reflective layer 314 may be about 10 nm or less.

The heat source 310 may include a heat transfer body 315. The heat transfer body 315 may be configured to transfer heat generated by SPR to the medium M. The heat transfer body 315 may transfer heat in a conduction manner. In an embodiment not shown, a gap may be formed between the heat transfer body 315 and the medium M, and the heat transfer body 315 may transfer heat to the medium M in a convection manner or a radiation manner. The heat transfer body 315 may include a metal material. For example, the heat transfer body 315 may include aluminum or copper.

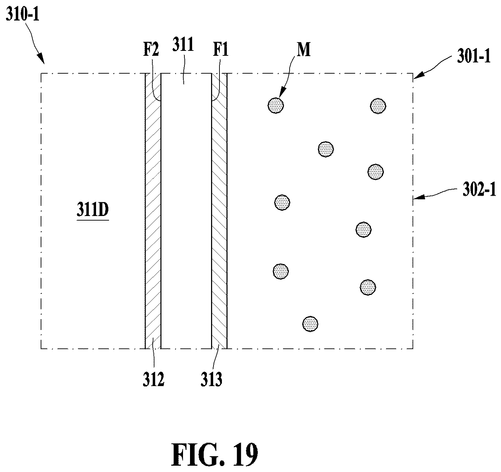

FIG. 19 is a diagram illustrating a cross-section of a portion of a heat source according to an embodiment.

Referring to FIG. 19, an aerosol generating article 301-1 may include a heat source 310-1. The heat source 310-1 may include the substrate 311. The heat source 310 may include the metal layer 312 disposed on the inner surface F2. Light entering the cavity 311D may be transferred to the metal layer 312. The heat source 310 may include the absorbing layer 313. The absorbing layer 313 may be attached to the outer surface F1. The heat source 310 may not include the reflective layer 314.

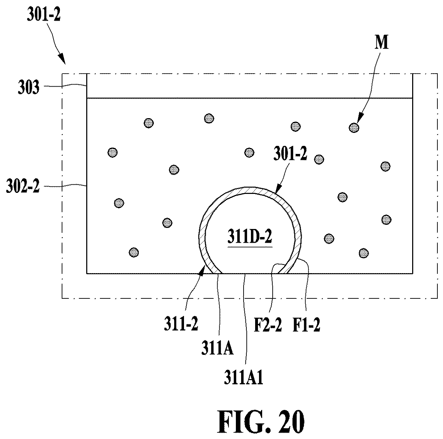

FIG. 20 is a diagram illustrating a cross-section of a portion of an aerosol generating article according to an embodiment.

Referring to FIG. 20, an aerosol generating article 301-2 may include a first segment 302-2 and a second segment 303. The first segment 302-2 may include a medium M and a heat source 310-2. The heat source 310-2 may include a substrate 311-2. The substrate 311-2 may include a first end portion 311A, an outer surface F1-2, and an inner surface F2-2. The first end portion 311A of the substrate 311-2 may include an opening 311A1.

The inner surface F2-2 of the substrate 311-2 may include a curved surface. The inner surface F2-2 may define a cavity 311D-2. For example, the inner surface F2-2 may define a substantially semispherical cavity 311D-2. The inner surface F2-2 may be substantially continuous throughout the entire area. A partial area of the inner surface F2-2 may be discontinuous with another area. The inner surface F2-2 may have a substantially constant radius of curvature R throughout the entire area. The radius of curvature R of a partial area of the inner surface F2-2 may be different from the radius of curvature R of another area.

The outer surface F1-2 of the substrate 311-2 may include a curved surface. The outer surface F1-2 may be substantially parallel to the inner surface F2-2. A partial area of the outer surface F1-2 may not be parallel to a partial area of the inner surface F2-2 that the area faces. In an embodiment not shown, at least a partial area of the outer surface F1-2 may be substantially flat.

The substrate 311-2 may be implemented as a three-dimensional solid that is representable with an azimuth angle and an altitude angle. For example, the substrate 311-2 may include a domical solid. For example, the substrate 311-2 may be implemented as a three-dimensional solid substantially having an azimuth angle of 360 degrees and an altitude angle in a range of about -60 degrees to 90 degrees.

The domical shape of the substrate 311-2 may enable the heat generated from the heat source 310 to be evenly transferred to the medium M.

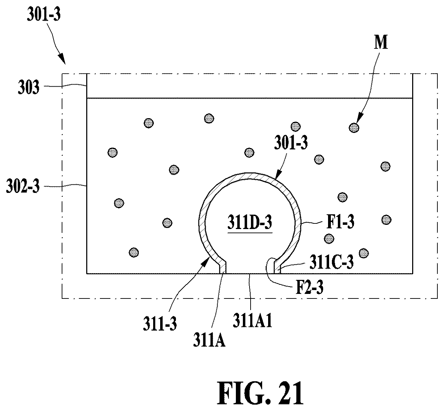

FIG. 21 is a diagram illustrating a cross-section of a portion of an aerosol generating article according to an embodiment.

Referring to FIG. 21, an aerosol generating article 301-3 may include a first segment 302-3 and a second segment 303. The first segment 302-3 may include a medium M and a heat source 310-3. The heat source 310-3 may include a substrate 311-3. The substrate 311-3 may include a first end portion 311A, an outer surface F1-3, and an inner surface F2-3. The first end portion 311A of the substrate 311-2 may include an opening 311A1.

The substrate 311-3 may include a lateral portion 311C-3 extending downstream from the first end portion 311A. The inner surface F2-3 of the substrate 311-3 may include a curved surface disposed downstream from an end portion (e.g., an end portion opposite to the first end portion 311A) closer to the downstream side among end portions of the lateral portion 311C. The inner surface F2-3 may define a cavity 311D-3. For example, the inner surface F2-3 may define a substantially cylindrical cavity in an area having the lateral portion 311C-3, and may define a domical cavity in an area having a curved surface disposed downstream from a cylindrical solid.

The substrate 311-3 may include a cylindrical solid, and a domical solid disposed downstream from the cylindrical solid. For example, the substrate 311-3 may include a bulb-shaped solid.

The bulb shape of the substrate 311-3 may enable heat generated from the heat source 310 to be evenly transferred to the medium M.

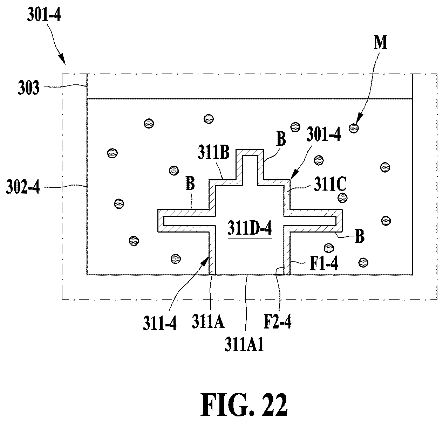

FIG. 22 is a diagram illustrating a cross-section of a portion of an aerosol generating article according to an embodiment.

Referring to FIG. 22, an aerosol generating article 301-4 may include a first segment 302-4 and a second segment 303. The first segment 302-4 may include a medium M and a heat source 310-4. The heat source 310-4 may include a substrate 311-4. The substrate 311-4 may include a first end portion 311A, a second end portion 311B, an outer surface F1-4, and an inner surface F2-4. The first end portion 311A of the substrate 311-4 may include an opening 311A1.

The substrate 311-4 may have a branch shape. The substrate 311-4 may include at least one branch B extending in any direction from the lateral portion 311C or the second end portion 311B. At least one branch B may increase the surface area facing the medium M. The branch shape of the substrate 311 may enable the heat generated from the heat source 310 to be evenly transferred to the medium M.

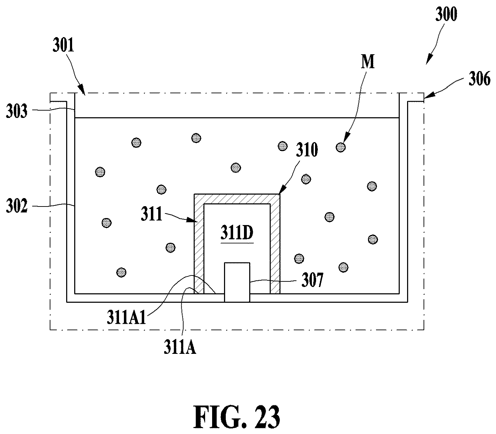

FIG. 23 is a diagram illustrating an aerosol generating system according to an embodiment.

Referring to FIG. 23, an aerosol generating system 300 may include the aerosol generating article 301, and an aerosol generating device 306 configured to generate an aerosol from the aerosol generating article 301. The aerosol generating article 301 may include the first segment 302 and the second segment 303. The first segment 302 may include the medium M and the heat source 310. The heat source 310 may include the substrate 311. In an embodiment not shown, the substrate 311 may have various shapes (e.g., the substrate 311-2 of FIG. 20, the substrate 311-3 of FIG. 21, or the substrate 311-4 of FIG. 22).

When the heat source 310 is included in the aerosol generating article 301, the size of the aerosol generating device 306 may be reduced compared to when the heat source 310 is included in the aerosol generating device 306.

The aerosol generating device 306 may include a light source 307 configured to emit light. For example, the light source 307 may include a laser light source. The light source 307 may emit light in the ultraviolet band, visible light band, and/or infrared band.

The light source 307 may be disposed so that light emitted from the light source 307 is transferred to the heat source 310. For example, when the aerosol generating article 301 is inserted into the aerosol generating device 306, the light source 307 may be disposed in the cavity 311D. In an embodiment not shown, the light source 307 may be disposed to transfer light from the outside of the cavity 311D to the heat source 310.

In an embodiment not shown, the aerosol generating system 300 may use an external light source that is provided outside the aerosol generating device 306 without an internal light source of the aerosol generating device 306.

In an embodiment not shown, the aerosol generating device 306 may include an optical fiber (not shown). The optical fiber may be configured to transfer light generated from the light source 307 to the heat source 310. The optical fiber may be coupled into the opening 311A1. Light passing through the opening 311A1 through the optical fiber may enter the cavity 311D and advance toward the inner surface of the substrate 311. The optical fiber may be closely coupled to the opening 311A1. This may increase the efficiency of light passing through the optical fiber to the cavity 311D to about 99%. This may allow the amount of light used by the heat source 310 to be controlled to a predictable level, and consequently reduce the heat loss of the heat source 310 and ensure the thermal stability of the heat source 310.

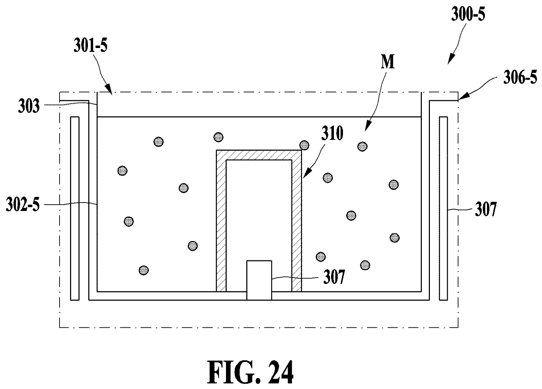

FIG. 24 is a diagram illustrating an aerosol generating system according to an embodiment.

Referring to FIG. 24, an aerosol generating system 300-5 may include an aerosol generating article 301-5 and an aerosol generating device 306-5. An aerosol generating article 301-5 may include a first segment 302-5, a medium M, and a heat source 310.

The aerosol generating device 306-5 may include a plurality of light sources 307 configured to emit light. The plurality of light sources 307 may be configured to transfer light to the heat source 310. Some of the plurality of light sources 307 may be disposed around the circumference of the first segment 302-5 to transfer light to the first segment 302-5. For example, the aerosol generating device 306-5 may include light sources 307 in a cylindrical form which are arranged around the circumference of the first segment 302-5 when the aerosol generating article 301 is inserted into the aerosol generating device 306-5. For example, the light sources 307 may be disposed around the circumference of the first segment 302-5 to transfer light to the first segment 302-5. The light transferred to the first segment 302-5 may be transferred to the heat source 310.

In an embodiment not shown, the first segment 302-5 may include a plurality of heat sources 310. The plurality of heat sources 310 may be distributed at arbitrary intervals across the width or diameter of the first segment 302-5. The plurality of heat sources 310 may enable heat generated from the plurality of heat sources 310 to be evenly transferred to the medium M. Each of the plurality of heat sources 310 may include substrates in various shapes (e.g., the substrate 311 of FIG. 17, the substrate 311-2 of FIG. 20, the substrate 311-3 of FIG. 21, or the substrate 311-4 of FIG. 22).

In an embodiment not shown, the aerosol generating device 306-5 may include a single light source 307, and may include the plurality of heat sources 310.

Some embodiments of the disclosure described above or other embodiments are not mutually exclusive or distinct from each other. Some embodiments of the disclosure described above or other embodiments may be used jointly or combined with each other in configuration or function.

For example, a configuration A described in one embodiment and/or drawing and a configuration B described in another embodiment and/or drawing may be combined with each other. Namely, although the combination between the configurations is not directly described, the combination is possible except in cases where it is described that the combination is impossible.

The above detailed description should not be construed in all aspects as limiting and should be considered illustrative. The scope of the present disclosure should be determined by rational interpretation of the appended claims, and all variations within the scope of equivalents of the present disclosure are included in the scope of the present disclosure.

## Claims

1. An aerosol generating article comprising:
a first segment,
wherein the first segment comprises:
a medium; and
a heat source configured to generate heat by surface plasmon resonance (SPR), and
the heat source comprises:
a substrate; and
a plurality of metal particles disposed on the substrate.

2. The aerosol generating article of claim 1, wherein the heat source further comprises an absorbing layer disposed on the substrate and configured to absorb light penetrating through the substrate.

3. The aerosol generating article of claim 1, wherein the heat source further comprises a reflective layer disposed on the substrate and configured to reflect light toward the substrate.

4. The aerosol generating article of claim 1, wherein the heat source further comprises a heat transfer body configured to transfer heat to the medium.

5. The aerosol generating article of claim 1, wherein the substrate comprises:
a first end portion facing upstream of the first segment;
a second end portion facing downstream of the first segment; and
a side portion extending between the first end portion and the second end portion.

6. The aerosol generating article of claim 5, wherein the first end portion comprises an opening.

7. The aerosol generating article of claim 5, wherein the second end portion comprises a closed surface.

8. The aerosol generating article of claim 1, wherein the first segment comprises a plurality of heat sources distributed at arbitrary intervals across a width or a diameter of the first segment.

9. The aerosol generating article of claim 1, further comprising:
a second segment connected to the first segment,
wherein the second segment comprises a filter.

10. The aerosol generating article of claim 9, further comprising:
a third segment connected to the second segment,
wherein the third segment is configured to cool a generated aerosol.

11. The aerosol generating article of claim 10, further comprising:
a fourth segment connected to the third segment,
wherein the fourth segment comprises an acetate tow.

12. The aerosol generating article of claim 1, wherein the substrate comprises:
an outer surface; and
an inner surface opposite to the outer surface, and
the inner surface comprises a curved surface and defines a cavity.

13. The aerosol generating article of claim 1, wherein the substrate comprises:
a first end portion facing upstream of the first segment; and
a side portion extending toward downstream from the first end portion, and
the substrate has a domical solid disposed toward downstream from the side portion.

14. The aerosol generating article of claim 1, wherein the substrate comprises:
a first end portion facing upstream of the first segment;
a second end portion facing downstream of the first segment;
a side portion extending between the first end portion and the second end portion; and
at least one extension extending from the second end portion or the side portion.

15. An aerosol generating system comprising:
the aerosol generating article of claim 1; and
an aerosol generating device configured to generate an aerosol from the aerosol generating article,
wherein the aerosol generating device comprises a plurality of light sources.
